# EUROPÄISCHE PATENTANMELDUNG

(11) **EP 4 528 897 A1**
(43) Veröffentlichungstag der Anmeldung: **26.03.2025**
(21) Anmeldenummer: 24192539.5
(22) Anmeldetag: 02.08.2024
(51) Int. Cl.: H01M 50/213, H01M 50/249, H01M 50/258, H01M 50/503

(54) **ENERGIESPEICHEREINHEIT FÜR EIN ELEKTROMOTORISCH ANGETRIEBENES FAHRZEUG**

(30) Priorität: 21.09.2023 DE 102023209212
(71) Anmelder: Robert Bosch GmbH, 70442 Stuttgart (DE)
(72) Erfinder: Koeder, Thilo, 70839 Gerlingen (DE); Kunert, Peter, 72805 Lichtenstein (DE); Buck, Simon, 72813 St. Johann (DE); Ehard, Dennis, 72800 Eningen Unter Achalm (DE); Mehlo, Dennis, 72766 Reutlingen (DE)

(57) **Zusammenfassung**

Die Erfindung betrifft eine Energiespeichereinheit (16) für ein elektromotorisch angetriebenes Fahrzeug (10), insbesondere für ein elektromotorisch angetriebenes Ein- oder Zweirad (12), mit einem Subgehäuse (44), in dem zumindest zwei Zellstacks (46) zur Aufnahme von jeweils mindestens zwei als Rundzellen (50) ausgebildeten elektrochemischen Energiespeicherzellen (52) aufgenommen sind, wobei jede Energiespeicherzelle (52) zwei elektrische Zellpole (58) aufweist und die elektrischen Zellpole (58) zumindest zweier Energiespeicherzellen (52) über zumindest einen Zellverbinder (56) elektrisch leitend in einer Reihen- und/oder Parallelschaltung miteinander verbunden sind. Es wird vorgeschlagen, dass die zumindest zwei Zellstacks (46) derart benachbart zueinander angeordnet sind, dass eine Verpressvorrichtung (68) der Energiespeichereinheit (16) die Zellverbinder (56) mit den elektrischen Zellpolen (58) der Energiespeicherzellen (52) im montierten Zustand der Energiespeichereinheit (16) stoffschlussfrei kraftschlüssig verbindet, wobei eine Zugkraft (F_{T}) der Verpressvorrichtung (68) au-ßerhalb des Subgehäuses (44) verstellbar ist. Ferner betrifft die Erfindung ein elektromotorisch angetriebenes Fahrzeug (10), insbesondere ein elektromotorisch angetriebenes Ein- oder Zweirad (12), mit einer mit dem elektromotorisch angetriebenen Fahrzeug (10) lösbar verbindbaren oder in dem elektromotorisch angetriebenen Fahrzeug (10) fest integrierten Energiespeichereinheit (16).

## Beschreibung

Die Erfindung betrifft eine Energiespeichereinheit für ein elektromotorisch angetriebenes Fahrzeug, insbesondere für ein elektromotorisch angetriebenes Ein- oder Zweirad, sowie ein elektromotorisch angetriebenes mit einer mit dem elektromotorisch angetriebenen Fahrzeug lösbar verbindbaren oder in dem elektromotorisch angetriebenen Fahrzeug fest integrierten elektrochemischen Energiespeichereinheit nach der Gattung der nebengeordneten Ansprüche

### Stand der Technik

Eine Vielzahl elektromotorisch angetriebener Fahrzeuge wird mit wiederaufladbaren Energiespeichereinheiten betrieben, die entsprechend durch das elektromotorisch angetriebene Fahrzeug entladen werden und mittels eines Ladegeräts wieder aufladbar sind. Derartige Energiespeichereinheiten umfassen eine Mehrzahl von in Reihe und/oder parallel verschalteter elektrochemischer Energiespeicherzellen zur Erzielung einer geforderten Batteriespannung bzw. -kapazität. Sind die Energiespeicherzellen beispielsweise als Lithium-Ionen-Zellen (Li-lon) ausgebildet, lässt sich mit besonderem Vorteil eine sehr hohe Leistungs- und Energiedichte erzielen. In der Regel verfügt eine derartige Energiespeichereinheit über ein Außengehäuse, in dem zumindest zwei so genannte Zellstacks zur Aufnahme von jeweils mindestens zwei als Rundzellen ausgebildeten Energiespeicherzellen aufgenommen sind. Jede Energiespeicherzelle weist zwei elektrische Zellpole auf, wobei die elektrischen Zellpole zumindest zweier Energiespeicherzellen über zumindest einen Zellverbinder elektrisch leitend zur Erzielung der Reihen- und/oder Parallelschaltung miteinander verbunden sind.

Aus der WO 2021/048028 A1 ist eine wiederaufladbare Energiespeichereinheit für ein elektromotorisch angetriebenes Fahrzeug bekannt, bei der eine Mehrzahl von als Rundzellen ausgebildeten, elektrochemischen Energiespeicherzellen elektrisch über zwei an den stirnseitigen Enden der Rundzellen angeordneten Zellverbindervorrichtungen verbunden sind. Die Zellverbindervorrichtungen sind als Leiterplatten mit Öffnungen und darin angeordneten, federelastischen Kontaktelementen ausgebildet, die kraftschlüssig mit den stirnseitigen Zellpolen der Rundzellen verbindbar sind. Zur Gewährleistung der kraftschlüssigen Verbindung zwischen den Zellpolen und den Kontaktelementen ist eine Mehrzahl von Gewindestangen vorgesehen, die die beiden Leiterplatten durchgreifen und mittels beidseitig aufgeschraubter Muttern fixieren. Alternativ erfolgt die Fixierung der Zellverbindervorrichtungen über Vorsprünge, die im Außengehäuse der Energiespeichereinheit angeordnet sind.

Aus der DE 10 2021 206 819 A1 ist eine wiederaufladbare Energiespeichereinheit für ein elektromotorisch angetriebenes Fahrzeug bekannt, bei der je Zellstack eine Mehrzahl von als Rundzellen ausgebildeten, elektrochemischen Energiespeicherzellen elektrisch über zwei an den stirnseitigen Enden der Rundzellen angeordneten Zellverbindern in einer Reihen- und/oder Parallelschaltung verbunden sind. Die elektrische Verbindung zwischen den Zellverbindern und den Rundzellen erfolgt derart, dass die Zellpole der Energiespeicherzellen jeweils eine stoffschlüssige Schweißverbindung mit zumindest einem Kontaktelement des Zellverbinders aufweisen. Eine stoffschlüssige Verbindung bietet zwar einerseits einen sehr sicheren und dauerhaften elektrischen Kontakt, erschwert aber andererseits die Entnahme bzw. den Austausch von einzelnen Energiespeicherzellen, deren Maximalkapazität mit der Zeit stark nachgelassen hat oder die defekt sind. Auch die Entsorgung einer zu recycelnden Energiespeichereinheit wird dadurch erschwert, dass die einzelnen Energiespeicherzellen nur mit verhältnismäßig großem Aufwand von den Zellverbindern getrennt werden können.

Es ist Aufgabe der Erfindung, eine gegenüber dem Stand der Technik verbesserte Energiespeichereinheit bereitzustellen, die einen vereinfachten Austausch von Energiespeicherzellen insbesondere durch Service-Mitarbeiter in Verbindung mit einem sicheren Betrieb und einer flexibleren Anpassbarkeit der Zellverbindervorrichtung an die geforderte Batteriespannung bzw. -kapazität der Energiespeichereinheit ermöglicht.

### Vorteile der Erfindung

Zur Lösung der Aufgabe ist vorgesehen, dass die zumindest zwei Zellstacks der Energiespeichereinheit derart benachbart zueinander angeordnet sind, dass eine Verpressvorrichtung der Energiespeichereinheit die Zellverbinder mit den elektrischen Zellpolen der Energiespeicherzellen im montierten Zustand der Energiespeichereinheit stoffschlussfrei kraftschlüssig verbindet, wobei eine Zugkraft der Verpressvorrichtung außerhalb eines Subgehäuses verstellbar ist. Unter einem Subgehäuse soll insbesondere ein Teilgehäuse verstanden werden, dass die einzelnen Zellstacks zusammenhält und im Außengehäuse der Energiespeichereinheit angeordnet ist. Mit besonderem Vorteil ermöglicht die Erfindung einen vereinfachten Austausch einzelner Energiespeicherzellen, deren Maximalkapazität mit der Zeit stark nachgelassen hat oder die defekt sind. Darüber hinaus kann auf einfache Weise ein Toleranzausgleich in der Längenausdehnung der Energiespeicherzellen derart erfolgen, dass die kraftschlüssige Verbindung zwischen den Zellpolen und dem Zellverbinder durch die Verpressvorrichtung anpassbar ist.

Das elektromotorisch angetriebene Fahrzeug kann beispielsweise als ein Elektrofahrrad (z.B. EPAC - Electrically Power Assisted Cycle, e-Bike, Pedelec, e-Lastenfahrrad, etc.), ein Elektromotorrad, ein ein- oder zweirädriger e-Scooter, ein e-Mofa oder dergleichen, ausgebildet sein. Die Erfindung ist ebenso anwendbar auf andere Anwendungen im Bereich der Micro-Mobilitäts-Anwendungen wie z.B. e-kick-Scooter, Mono-wheels oder andere nicht typzugelassener Fahrzeuge mit fest oder austauschbar im Fahrzeug verbauten Akkupacks. Unter einem elektromotorisch angetriebenen Fahrzeug soll daher auch ein Fahrzeug verstanden werden, dass eine Antriebseinheit zur Unterstützung des Fahrers bzw. einen elektromotorischen Teilantrieb aufweist.

Die Energiespeichereinheit kann im elektromotorisch angetriebenen Fahrzeug fest integriert oder als werkzeuglos lösbarer Wechselakkupack ausgebildet sein. Im Falle eines Wechselakkupacks kann zudem vorgesehen sein, dass dieser sowohl im mit dem elektromotorisch angetriebenen Fahrzeug verbundenen Zustand als auch im vom elektromotorisch angetriebenen Fahrzeug getrennten Zustand aufladbar ist. Die Batteriespannung der Energiespeichereinheit ist in der Regel ein Vielfaches der Spannung einer einzelnen Energiespeicherzelle der Energiespeichereinheit und ergibt sich aus der Verschaltung (parallel und/oder seriell) der einzelnen Energiespeicherzellen. Bevorzugt sind die Energiespeicherzellen als lithiumbasierte Energiespeicherzellen, z.B. Li-Ion, Li-Polymer, Li-Metall, Na-Ionen oder dergleichen, ausgebildet. Die Erfindung ist aber auch für Energiespeichereinheiten mit Ni-Cd-, Ni-MH-Zellen oder andere geeignete Zellenarten anwendbar. Bei gängigen Li-lon-Energiespeicherzellen mit einer Zellspannung von 3,6 V ergeben sich beispielhaft nominelle Batteriespannungen von 3,6 V, 18 V, 36 V, 54 V, etc. Die Erfindung ist jedoch nicht von der Art und Bauform der verwendeten Energiespeicherzellen und der Energiespeichereinheit abhängig, sondern kann auf beliebige elektrochemische Energiespeichereinheiten und Energiespeicherzellen, z.B. neben Rundzellen auch Pouchzellen oder dergleichen, mit Batteriespannungen von 36 V, 48 V, 52 V oder dergleichen angewendet werden.

Eine weitere Ausgestaltungsform der Erfindung sieht vor, dass die Verpressvorrichtung als zumindest eine durch das Subgehäuse hindurch ragende Stange mit zumindest einem stirnseitig angebrachten Gewindeabschnitt ausgebildet ist und die Zugkraft über eine mit dem Gewindeabschnitt verschraubbare Mutter verstellbar ist. In vorteilhafter Weise lässt sich die Zugkraft der Verpressvorrichtung so sehr einfach und reproduzierbar verändern, um einerseits über einen langen Betriebszeitraum der Energiespeichereinheit einen sicheren elektrischen Kontakt zwischen den Zellpolen der Energiespeicherzellen und den Zellverbindern zu gewährleisten und andererseits einen einfachen Austausch einzelner Energiespeicherzellen zu ermöglichen. Die Muttern können mit besonderem Vorteil als selbstsichernde Muttern ausgebildet sein.

Die Energiespeichereinheit weist zumindest eine Zellverbindervorrichtung mit einer Trägerschicht auf, wobei der zumindest eine Zellverbinder auf der Trägerschicht angeordnet ist und die Verpressvorrichtung zumindest einen der elektrischen Zellpole einer Energiespeicherzelle im montierten Zustand der Energiespeichereinheit gegen ein federelastisches Kontaktelement des Zellverbinders in Richtung der Trägerschicht drückt.

In einer Weiterbildung ist die Zellverbindervorrichtung zwischen zwei Zellstacks angeordnet, wobei auf zwei gegenüberliegenden Stirnseiten der Trägerschicht entlang einer Längsachse der Energiespeichereinheit jeweils zumindest ein Zellverbinder derart angeordnet ist, dass die Verpressvorrichtung die elektrischen Zellpole zweier entlang der Längsachse benachbarter Energiespeicherzellen der beiden Zellstacks im montierten Zustand der Energiespeichereinheit jeweils gegen die Kontaktelemente der Zellverbinder in Richtung der Trägerschicht drückt.

Durch eine derartige symmetrische Vormontage der Zellverbindervorrichtung kann auf einfache Weise eine parallele oder serielle Verschaltung der Energiespeicherzellen ohne zusätzlichen stoffschlüssigen Verbindungsprozess realisiert werden. Dazu ist weiterhin vorgesehen, dass die zumindest zwei auf den Stirnseiten der Trägerschicht angeordneten Zellverbinder als ein einstückiges Leiterblech ausgebildet sind, das die Trägerschicht umgreift, um die elektrischen Zellpole zumindest eines Teils der Energiespeicherzellen der beiden Zellstacks elektrisch miteinander zu verbinden. Ein derartiges Leiterblech ermöglicht eine besonders einfache Montage der Zellverbindervorrichtung, da es quasi nur auf die Trägerschicht entlang ihrer Stirnseiten aufgeschoben werden muss.

Um die Wirkung der federelastischen Kontaktelemente zu unterstützen, weist die zumindest eine Zellverbindervorrichtung zumindest eine elastische Federkomponente auf, die derart zwischen der Trägerschicht und dem zumindest einen Kontaktelement des zumindest einen Zellverbinders angeordnet ist, dass die Verpressvorrichtung zumindest einen der elektrischen Zellpole der Energiespeicherzelle im montierten Zustand der Energiespeichereinheit gegen das zumindest eine Kontaktelement in Richtung der Trägerschicht entgegen einer Federkraft gedrückt wird, die aus einer ersten Federkraft des Kontaktelements und einer weiteren Federkraft der zumindest einen Federkomponente resultiert. Auf diese Weise lassen sich etwaige Längentoleranzen der Energiespeicherzellen noch besser ausgleichen. Weiterhin kann die Federkomponente einen definierten Anschlag für das entsprechende Kontaktelement beim Verpressen der Energiespeichereinheit durch die Verpressvorrichtung bilden. Ergänzend kann einem etwaigen Nachlassen der federelastischen Wirkung der Kontaktelemente vorbeugend entgegengewirkt werden.

Um ein radiales Verschieben einzelner Energiespeicherzellen z.B. bei einem Sturz der Energiespeichereinheit oder einem Aufprall des elektromotorisch angetriebenen Fahrzeugs zu vermeiden, ist weiterhin vorgesehen, dass die Federkomponente im montierten Zustand der Energiespeichereinheit einen reibschlüssigen Haftkontakt zu der Energiespeicherzelle im Bereich ihres Zellpols bewirkt.

Die Federkomponente kann aus einem Elastomer, insbesondere einem thermoplastischen Elastomer (TPE), einem Schaum, insbesondere Poron, und/oder aus einem synthetischen Polymer, insbesondere Silikon, bestehen. Die Trägerschicht der Zellverbindervorrichtung besteht in vorteilhafter Weise aus einem Polyamid oder aus Polypropylen. Der Zellverbinder kann seinerseits aus einem elektrisch leitenden Metall, wie Nickel, Kupfer, Stahl, Aluminium oder Hilumin (diffusionsgeglühter Bandstahl mit elektrolytischer Nickelbeschichtung) bestehen.

Eine weitere Ausgestaltungsform der Erfindung sieht vor, dass jeder Zellstack der Energiespeichereinheit eine Mehrzahl hohlzylinderförmiger Bohrungen zur Aufnahme je einer Energiespeicherzelle aufweist, wobei entlang der Längsachse der Energiespeichereinheit in der Bohrung ein Längsspalt derart vorgesehen ist, dass zumindest ein an den Längsspalt angrenzender, gefedert gelagerter Längssteg der Bohrung eine radiale Fixierung der Rundzelle bewirkt und ein Innendurchmesser der Bohrung ohne den Längssteg größer ist als ein Außendurchmesser der jeweils darin aufgenommenen Rundzelle. Auf diese Weise können die einzelnen Energiespeicherzellen sehr einfach in Richtung ihrer Längenausdehnung in den Zellstack eingeschoben werden und sind in radialer Richtung gegen ein Verschieben relativ zu dem mit einem ihrer Zellpole verbundenen Kontaktelement des Zellverbinders gesichert.

Damit sich die Zellverbindervorrichtungen und die Zellstacks nicht relativ zueinander bewegen können, weisen die Trägerschicht der Zellverbindervorrichtung und der Zellstack jeweils eine Mehrzahl von Formschlusselementen zu ihrer gegenseitigen, mechanischen Verbindung auf. Gleichzeitig kann über die Formschlusselemente ein eindeutige Montage der Zellverbindervorrichtungen an den Zellstacks im Sinne einer Poka-Yoke-Lösung erzielt werden, um z.B. eine Verpolung der Energiespeicherzellen bei der Montage zu vermeiden.

Zur Lösung der eingangs erwähnten Aufgabe kann weiterhin vorgesehen sein, dass die Energiespeichereinheit zumindest eine Zellverbindervorrichtung mit einer Trägerschicht aufweist, auf der der zumindest eine Zellverbinder derart angeordnet ist, dass zumindest einer der elektrischen Zellpole einer Energiespeicherzelle im montierten Zustand der Energiespeichereinheit gegen ein elektrisches Kontaktelement des Zellverbinders in Richtung der Trägerschicht drückt, um das Kontaktelement kraftschlüssig, insbesondere stoffschlussfrei kraftschlüssig, mit dem elektrischen Zellpol zu verbinden. Somit ergibt sich gegenüber dem Stand der Technik der Vorteil einer höheren Kontaktsicherheit, da die Trägerschicht einen definierten Anschlag für die Kontaktelemente bildet. Zudem ist es durch die getrennte Ausbildung von Trägerschicht und Zellverbinder möglich, die Zellverbindervorrichtung auf einfache Weise durch entsprechende Modifikationen am Zellverbinder an eine geforderte Batteriespannung bzw. -kapazität der Energiespeichereinheit anzupassen.

Eine weitere Ausgestaltungsform der Erfindung sieht vor, dass die Trägerschicht zwei gegenüber liegende Stirnseiten aufweist und auf jeder Stirnseite zumindest ein Zellverbinder mit zumindest einem Kontaktelement angeordnet ist. Die Energiespeichereinheit weist entlang einer Längsachse zumindest zwei Zellstacks zur Aufnahme von jeweils mindestens zwei Energiespeicherzellen auf. Die Zellverbindervorrichtung ist zwischen zwei benachbarten Zellstacks angeordnet und weist auf zwei gegenüberliegenden Stirnseiten der Trägerschicht jeweils zumindest einen Zellverbinder derart auf, dass die elektrischen Zellpole zweier entlang der Längsachse benachbarter Energiespeicherzellen der beiden Zellstacks im montierten Zustand der Energiespeichereinheit jeweils gegen die Kontaktelemente der Zellverbinder in Richtung der Trägerschicht gedrückt werden. Durch eine derartige symmetrische Vormontage der Zellverbindervorrichtung kann auf einfache Weise eine parallele oder serielle Verschaltung der Energiespeicherzellen ohne zusätzlichen stoffschlüssigen Verbindungsprozess realisiert werden.

Weiterhin ist vorgesehen, dass die zumindest zwei auf den Stirnseiten der Trägerschicht angeordneten Zellverbinder als ein einstückiges Leiterblech ausgebildet sind, das die Trägerschicht umgreift, um die elektrischen Zellpole zumindest eines Teils der Energiespeicherzellen der beiden Zellstacks elektrisch miteinander zu verbinden. Ein derartiges Leiterblech ermöglicht eine besonders einfache Montage der Zellverbindervorrichtung, da es quasi nur auf die Trägerschicht entlang ihrer Stirnseiten aufgeschoben werden muss.

Zur Lösung der eingangs definierten Aufgabe ist ferner vorgesehen, dass der Zellverbinder zumindest ein primäres Kontaktelement aufweist, das mit dem Zellpol einer Energiespeicherzelle stoffschlüssig verbunden ist und dass der Zellverbinder für zumindest eines der primären Kontaktelemente mindestens ein redundantes Kontaktelement aufweist, das im Ursprungszustand der montierten Energiespeichereinheit mit keinem elektrischen Zellpol der Energiespeicherzellen stoffschlüssig verbunden ist. Mit besonderem Vorteil ermöglicht die Erfindung trotz der stoffschlüssigen Verbindung eine einfache Entnahme von Energiespeicherzellen, deren Maximalkapazität mit der Zeit stark nachgelassen hat oder die defekt sind. Dazu kann die zu entnehmende Energiespeicherzelle samt des mit ihr stoffschlüssig verbundenen, primären Kontaktelements einfach vom Zellverbinder abgetrennt werden.

In einer Weiterbildung der Erfindung ist vorgesehen, dass das zumindest eine redundante Kontaktelement in einem Servicefall zur stoffschlüssigen Verbindung mit einem elektrischen Zellpol einer Ersatz-Energiespeicherzelle für die mit dem primären Kontaktelement verbundenen Energiespeicherzelle dient. Somit kann die Ersatz-Energiespeicherzelle nach Entnahme der auszutauschenden Energiespeicherzelle in sehr einfacher Weise stoffschlüssig mit dem redundanten Kontaktelement des Zellverbinders verbunden werden.

Das zumindest eine redundante Kontaktelement ist derart benachbart zum primären Kontaktelement angeordnet, dass eine Außenkontur des primären und des zumindest einen redundanten Kontaktelements einen Außenumfang der verbundenen Energiespeicherzelle nicht überschreitet. Somit kann in besonders vorteilhafter Weise eine kompakte Bauform des Zellverbinders realisiert werden. Das zumindest eine redundante Kontaktelement liegt dann beispielsweise nur kraftschlüssig auf dem Zellpol der mit dem primären Kontaktelement verbundenen Energiespeicherzelle auf. Zudem kann der Zellverbinder zum Austausch einer Energiespeicherzelle unverändert an derselben Position in der Energiespeichereinheit verbleiben.

In einer alternativen oder ergänzenden Ausgestaltung ist vorgesehen, dass das zumindest eine redundante Kontaktelement derart benachbart zum primären Kontaktelement angeordnet ist, dass es durch ein Umklappen an die Position des primären Kontaktelements verbringbar ist. Mit besonderem Vorteil kann auf diese Weise auch für die Ersatz-Energiespeicherzelle die gleiche, optimale Stelle am Zellpol zur stoffschlüssigen Verbindung mit dem redundanten Kontaktelement des Zellverbinders genutzt werden. Zudem können die Zellpole der Energiespeicherzellen eine kleine elektrische Kontaktfläche aufweisen, um etwaige Kriechströme und Schlüsse zu vermeiden.

Um den Austausch gleich mehrerer Energiespeicherzellen in einem Arbeitsgang zu ermöglichen, weist der Zellverbinder eine Haupterstreckungsebene auf, die insbesondere quer zu einer Längsachse der Energiespeichereinheit verläuft, wobei das zumindest eine redundante Kontaktelement derart benachbart zum primären Kontaktelement angeordnet ist, dass es durch ein Verschieben des Zellverbinders entlang der Haupterstreckungsebene in die Position des primären Kontaktelements verbringbar ist.

Zur Vermeidung von Kurzschlüssen ist weiterhin vorgesehen, dass das zumindest eine redundante Kontaktelement im Ursprungszustand der montierten Energiespeichereinheit, insbesondere mittels einer Isolierfolie, elektrisch isoliert ist. Auf diese Weise kann zudem ein versehentlicher Aktivierungsvorgang des redundanten Kontaktelements vermieden werden.

Um den Service bzw. die Entsorgung der Energiespeichereinheit weiter zu vereinfachen, weisen das primäre und/oder das zumindest eine redundante Kontaktelement eine Sollbruchstelle zur mechanischen Trennung von dem Zellverbinder auf. Die Sollbruchstelle muss derart ausgebildet sein, dass sie einer Normalbelastung Stand hält und somit ausreichend robust gegenüber äußeren mechanischen Einflüssen auf die Energiespeichereinheit, beispielsweise bei Stürzen, Schlägen oder starken Vibrationen, während ihres vorgesehenen Lebenszyklus ist.

Weiterhin kann das primäre und/oder das zumindest eine redundante Kontaktelement eine Führungsgeometrie zur Abtrennung an der Sollbruchstelle aufweisen. Auf diese Weise kann die Abtrennung mittels eines geeigneten Hilfswerkzeugs, z.B. einer Trennzange oder eines Hebelwerkzeugs, vereinfacht werden, das an der Führungsgeometrie angesetzt wird. Zudem kann die Hilfsgeometrie derart ausgestaltet werden, dass sie einen Austausch der Energiespeicherzelle bzw. eine Manipulation am Zellverbinder erkennbar macht.

Die Sollbruchstelle ist in unmittelbarer Umgebung eines Verbindungspunktes zwischen dem primären bzw. dem zumindest einen redundanten Kontaktelement und dem elektrischen Zellpol angeordnet. Somit kann die Geometrie eines so genannten Schweißdimpels des Kontaktelements derart gestaltet werden, dass sie bei einer speziellen Bewegung leicht bricht. Insbesondere kann die Sollbruchstelle durch Zug, Druck und/oder Torsion bzw. eine Scherbewegung auftrennbar sein. Dadurch bleibt sie weiterhin robust gegenüber der oben erwähnten Normalbelastung. Weiterhin ist denkbar, dass der Schweißdimpel selbst sensitiv auf eine Torsion ausgelegt ist. Somit ließe er sich durch eine einfach Rotation der auszutauschenden Energiespeicherzelle um ihre Längsachse von dem Zellpol trennen.

Um den Austausch einer Energiespeicherzelle an derselben Position in der Energiespeichereinheit ggf. auch mehrmals vornehmen zu können, weist der Zellverbinder für das primäre Kontaktelement mindestens zwei redundante Kontaktelemente auf. Weiterhin kann vorgesehen sein, dass der Zellverbinder für jedes primäre Kontaktelement mindestens jeweils ein redundantes Kontaktelement aufweist. Somit lassen sich alle Energiespeicherzellen der Energiespeichereinheit im Servicefall auf die gleiche Weise austauschen.

Eine weitere Aufgabe der Erfindung dann darin bestehen, einen gegenüber dem Stand der Technik verbesserten Zellverbinder für eine Energiespeichereinheit bereitzustellen, der universell für verschiedene Topologien von Energiespeichereinheiten verwendbar ist. Zur Lösung der Aufgabe ist vorgesehen, dass der Zellverbinder zumindest einen Bearbeitungsbereich aufweist, mittels dem die Kontaktelemente für die Zellpole zumindest zweier unterschiedlicher Energiespeicherzellen mechanisch und/oder elektrisch voneinander trennbar sind. Mit besonderem Vorteil ermöglicht die Erfindung die Anwendbarkeit eines derartigen universellen Zellverbinders für Energiespeichereinheiten unterschiedlicher Spannungsbereiche und/oder Energiekapazitäten. Der erfindungsgemäße Zellverbinder ist daher derart ausgelegt, dass er für eine Maximalvariante der Energiespeichereinheit geeignet ist und entsprechend für Varianten geringerer Spannungsbereiche und/oder Energiekapazitäten auf einfache Weise durch eine elektromechanische Trennung der entsprechenden Kontaktelemente modifiziert werden kann.

Um die Anpassbarkeit weiter zu vereinfachen, ist der zumindest eine Bearbeitungsbereich als eine Sollbruchstelle, insbesondere eine Verjüngung und/oder eine Perforation, ausgebildet ist. Ergänzend oder alternativ weisen die mit einem elektrischen Zellpol der Energiespeicherzellen stoffschlüssig verbundenen Kontaktelemente des Zellverbinders eine Sollbruchstelle zur mechanischen Trennung von dem Zellverbinder auf. Die Sollbruchstelle muss dabei derart ausgebildet sein, dass sie einer Normalbelastung Stand hält und somit ausreichend robust gegenüber äußeren mechanischen Einflüssen auf die Energiespeichereinheit, beispielsweise bei Stürzen, Schlägen oder starken Vibrationen, während ihres vorgesehenen Lebenszyklus ist. Insbesondere kann die Sollbruchstelle durch Zug, Druck und/oder Torsion bzw. eine Scherbewegung auftrennbar sein. Dadurch bleibt sie weiterhin robust gegenüber der erwähnten Normalbelastung.

Weiterhin ist eine Führungsgeometrie zur Trennung der zumindest zwei Kontaktelemente an der Sollbruchstelle des Zellverbinders vorgesehen. Auf diese Weise kann die Trennung mittels eines geeigneten Hilfswerkzeugs, z.B. einer Trennzange oder eines Hebelwerkzeugs, vereinfacht werden, das an der Führungsgeometrie angesetzt wird. Auch ist es denkbar, dass die Sollbruchstelle selbst eine entsprechende Führungsgeometrie, beispielsweise in Form einer besonders ausgestalteten Perforation, aufweist.

In einer weiteren Ausgestaltung ist vorgesehen, dass der zumindest eine Bearbeitungsbereich eine Markierung aufweist. Dadurch ist es mit Vorteil möglich, den Bearbeitungsbereich leichter zu identifizieren und/oder zu bearbeiten. Mit besonderem Vorteil weisen diejenigen Bearbeitungsbereiche, die eine elektrisch sinnvolle Auftrennung ergeben, eine gleich gestaltete Markierung auf. Dies erleichtert die Bearbeitung des Zellverbinders ausgehend von seiner Maximalvariante für den angedachten Einsatzzweck in der Energiespeichereinheit.

An dem Zellverbinder, insbesondere an einem Randbereich des Zellverbinders, ist zumindest ein mechanischer Indikator zur Identifizierung einer am Zellverbinder vorgenommenen Modifikation vorgesehen. Somit kann im Servicefall leicht erkannt werden, dass sich der entsprechende Zellverbinder nicht mehr im Ursprungszustand für die Maximalvariante der Energiespeichereinheit befindet.

Der Erfindung betrifft zudem eine Energiespeichereinheit mit einer Mehrzahl von als Rundzellen ausgebildeten elektrochemischen Energiespeicherzellen und mit zumindest zwei erfindungsgemäßen Zellverbindern zu einer elektrischen Reihen- und/oder Parallelschaltung von zumindest zwei der Energiespeicherzellen, wobei die zumindest zwei Zellverbinder in ihrem Ursprungszustand identisch sind. Dabei ist zumindest einer der zumindest zwei Zellverbinder derart vor der Endmontage der Energiespeichereinheit bearbeitbar, dass zumindest zwei Kontaktelemente des bearbeiteten Zellverbinders mechanisch und/oder elektrisch voneinander getrennt sind.

### Ausführungsbeispiele

### Zeichnung

Die Erfindung wird im Folgenden anhand der Figuren 1 bis 20 beispielhaft erläutert, wobei gleiche Bezugszeichen in den Figuren auf gleiche Bestandteile mit einer gleichen Funktionsweise hindeuten.

Es zeigen
- Fig. 1:: eine schematische Darstellung eines als ein zweirädriges Elektrofahrrad ausgebildeten elektromotorisch angetriebenes Fahrzeugs in einer ersten Variante,
- Fig. 2:: eine schematische Darstellung des als zweirädriges Elektrofahrrad ausgebildeten elektromotorisch angetriebenen Fahrzeugs in einer zweiten Variante,
- Fig. 3:: ein erstes Ausführungsbeispiel einer Energiespeichereinheit für das elektromotorisch angetriebene Fahrzeug nach den Figuren 1 oder 2 in einer perspektivischen Ansicht,
- Fig. 4:: die Energiespeichereinheit gemäß Figur 3 in einem Schnitt entlang ihrer Längsachse,
- Fig. 5:: eine perspektivische Ansicht (Figur 5a) und eine Schnittansicht (Figur 5b) einer Zellverbindervorrichtung der Energiespeichereinheit gemäß des Ausführungsbeispiels nach den Figuren 3 und 4,
- Fig. 6:: ein weiteres Ausführungsbeispiel der Zellverbindervorrichtung in einer Schnittansicht entlang der Längsachse der Energiespeichereinheit,
- Fig. 7:: das Ausführungsbeispiel gemäß Figur 6 in einer perspektivischen Ansicht,
- Fig. 8:: ein weiteres Ausführungsbeispiel der Zellverbindervorrichtung in einer Schnittansicht entlang der Längsachse der Energiespeichereinheit,
- Fig. 9:: eine Explosionsdarstellung eines Zellstacks der Energiespeichereinheit samt zweier stirnseitig angeordneter Zellverbindervorrichtungen gemäß Figur 6,
- Fig. 10:: ein weiteres Ausführungsbeispiel eines als Leiterblech ausgebildeten Zellverbinders der Zellverbindervorrichtung vor (Figur 10a) und nach einer Bearbeitung (Figur 10b),
- Fig. 11:: ein weiteres Ausführungsbeispiel des Zellverbinders mit zwei primären und zwei redundanten Kontaktelementen für eine Energiespeicherzelle,
- Fig. 12:: ein weiteres Ausführungsbeispiel des Zellverbinders mit zwei primären und zwei redundanten Kontaktelementen für zwei Energiespeicherzellen,
- Fig. 13:: ein weiteres Ausführungsbeispiel des Zellverbinders mit einem primären und drei redundanten Kontaktelementen für eine Energiespeicherzelle,
- Fig. 14:: weitere Ausführungsbeispiele des Zellverbinders mit zumindest einem Bearbeitungsbereich für das primäre und das redundante Kontaktelement (Figur 14a) sowie für unterschiedliche Ausgestaltungen des Bearbeitungsbereichs für zwei primäre Kontaktelemente (Figuren 14b, 14c, 14d),
- Fig. 15:: Ausführungsbeispiele für eine lösbare Verbindung eines Kontaktelements an dem Zellverbinder als geschlossen Öse (Figur 15a) als einseitig offene Öse (Figur 15b) und als Steckverbindung (Figur 15c),
- Fig. 16:: ein Ausführungsbeispiel für eine lösbare Verbindung von vier Kontaktelementen an einem Zellverbinder mittels einer einzigen Schraubverbindung,
- Fig. 17:: ein Ausführungsbeispiel für eine lösbare Verbindung eines Kontaktelements mit einem als Schienensystem ausgebildeten Zellverbinder,
- Fig. 18:: ein weiteres Ausführungsbeispiel für eine lösbare Verbindung eines Kontaktelements mit dem als Schienensystem ausgebildeten Zellverbinder,
- Fig. 19:: eine Schnittansicht der reversiblen Steckverbindung gemäß Figur 15c für eine Zellverbindervorrichtung mit einem auf beiden Seiten angeordneten Zellverbinder und
- Fig. 20:: ein Ausführungsbeispiel einer reversiblen Verbindung zwischen der Zellverbindervorrichtung bzw. dem Zellverbinder und einer Leiterplatte der Energiespeichereinheit.

### Beschreibung der Ausführungsbeispiele

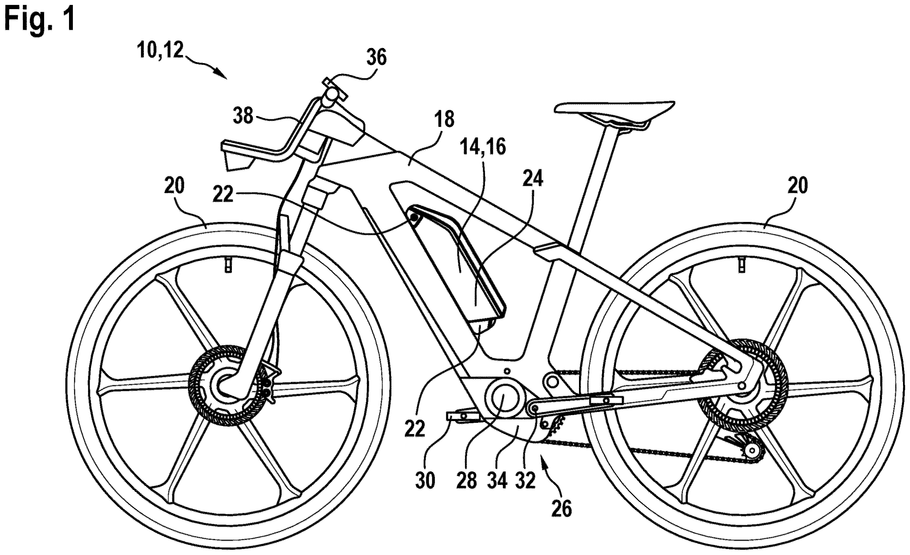

In Figur 1 ist eine schematische Darstellung eines elektromotorisch angetriebenes Fahrzeugs 10, das als ein zweirädriges Elektrofahrrad 12 ausgebildet ist, gezeigt. Das Elektrofahrrad 12 wird über eine als ein Wechselakkupack 14 ausgebildete Energiespeichereinheit 16 mit Energie versorgt und kann beispielsweise als ein Pedelec, als ein e-Bike oder dergleichen ausgebildet sein. Das Elektrofahrrad 12 weist ein Gehäuse in Form eines Rahmens 18 mit zwei im Rahmen 18 gelagerten Rädern 20 auf. Der Wechselakkupack 14 ist über eine am Rahmen 18 vorgesehene Verbindungsvorrichtung 22, die mit einer an einem Außengehäuse 24 des Wechselakkupacks 14 angebrachten Schnittstelle (nicht näher gezeigt) elektromechanisch zusammenwirkt, lösbar verbunden.

Das Elektrofahrrad 12 weist ferner eine Antriebseinheit 26 auf, die einen vorzugsweise als EC- bzw. BLDC-Motor ausgebildeten Elektromotor 28 in Form eines Mittelmotors umfasst. Statt eines Mittelmotors kann alternativ auch ein Nabenmotor in einem der Räder 20 zum Einsatz kommen. Auch die Antriebseinheit 26 wird über den Wechselakkupack 14 mit Energie versorgt und umfasst eine Elektronikeinheit (nicht dargestellt) zur Steuerung oder Regelung des Elektrofahrrads 12, insbesondere des Elektromotors 28. Die Elektronikeinheit ist ferner mit einer Sensoreinheit (ebenfalls nicht dargestellt) verbunden, die beispielhaft mehrere Sensorelemente, wie einen Drehmomentsensor, einen Bewegungssensor, beispielsweise in Form eines Beschleunigungssensors, und einen Magnetsensor umfasst. Am Elektrofahrrad 12 ist weiterhin eine Tretkurbel 30 mit einer Tretkurbelwelle 32 vorgesehen, über die der Fahrer eine Tretbewegung zum Antrieb des hinteren Rads 20 im Sinne eines konventionellen Fahrradantriebs durchführen kann. Die Elektronikeinheit, die Antriebseinheit 26 mit dem Elektromotor 28 und die Tretkurbelwelle 32 sind in einem mit dem Rahmen 18 verbundenen Antriebsgehäuse 34 angeordnet.

Die Antriebsbewegung des Elektromotors 28 wird vorzugsweise über ein Getriebe (nicht dargestellt) auf die Tretkurbelwelle 32 übertragen, wobei die Intensität der Unterstützung durch die Antriebseinheit 26 mittels der Elektronikeinheit gesteuert oder geregelt wird. Die Elektronikeinheit ist dazu ausgebildet, die Antriebseinheit 26 derart anzusteuern, dass ein Fahrer des Elektrofahrrads 12 beim Treten unterstützt wird. Vorzugsweise ist die Elektronikeinheit durch den Fahrer bedienbar ausgebildet, sodass der Fahrer den Unterstützungsgrad einstellen kann.

Das Elektrofahrrad 12 umfasst einen Bordcomputer 36, der an einem Lenker 38 des Elektrofahrrads 12 angeordnet ist. Der Bordcomputer 36 ist beispielhaft lösbar mit dem Elektrofahrrad 12 ausgebildet und umfasst ein Human Machine Interface (HMI), das zur Anzeige von Informationen und zur Steuerung des Bordcomputers 36 und/oder des Elektrofahrrads 12 bzw. der Antriebseinheit 26 dient. Das HMI ist beispielhaft als ein Touchscreen oder dergleichen ausgebildet. Der Bordcomputer 36 ist mit der Antriebseinheit 26 zum Austausch von Informationen und Befehlen verbunden. Beispielsweise ist über das HMI eine von der Elektronikeinheit der Antriebseinheit 26 mittels der Sensoreinheit ermittelte Geschwindigkeit, ein eingestellter Unterstützungsgrad des Elektromotors 28, eine Routeninformation einer im Bordcomputer 36 integrierten Navigationseinheit, ein Ladezustand des Wechselakkupacks 14 oder dergleichen anzeigbar.

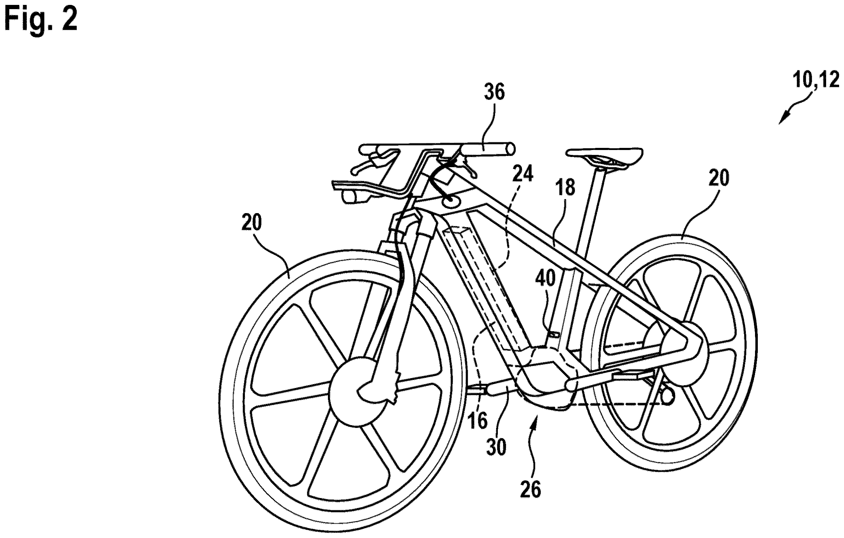

Figur 2 zeigt eine Alternative des Elektrofahrrads 12. Im Unterschied zu Figur 1 ist die Energiespeichereinheit 16 samt ihrer elektromechanischen Schnittstellen zur Energie- und/oder Datenübertragung zwischen dem Elektrofahrrad 12 und der Energiespeichereinheit 16 vollständig im Rahmen 18 des Elektrofahrrads 12 integriert. Zum einfacheren Austausch der Energiespeichereinheit 16 weist diese jedoch weiterhin ein Außengehäuse 24 auf. Darüber hinaus ist von außen zugänglich im Rahmen 18 des Elektrofahrrads 12 eine Lade- und/oder Entladeschnittstelle 40 zum Laden bzw. Entladen der Energiespeichereinheit 16 vorgesehen. Diese ist beispielhaft als eine USB-C-Schnittstelle ausgebildet. Es sind aber auch andere Schnittstellen zur kabelgebundenen oder kabellosen Energie- und/oder Datenübertragung denkbar. Zudem können auch mehrere derartige Schnittstellen 40 am Elektrofahrrad 12 vorgesehen sein.

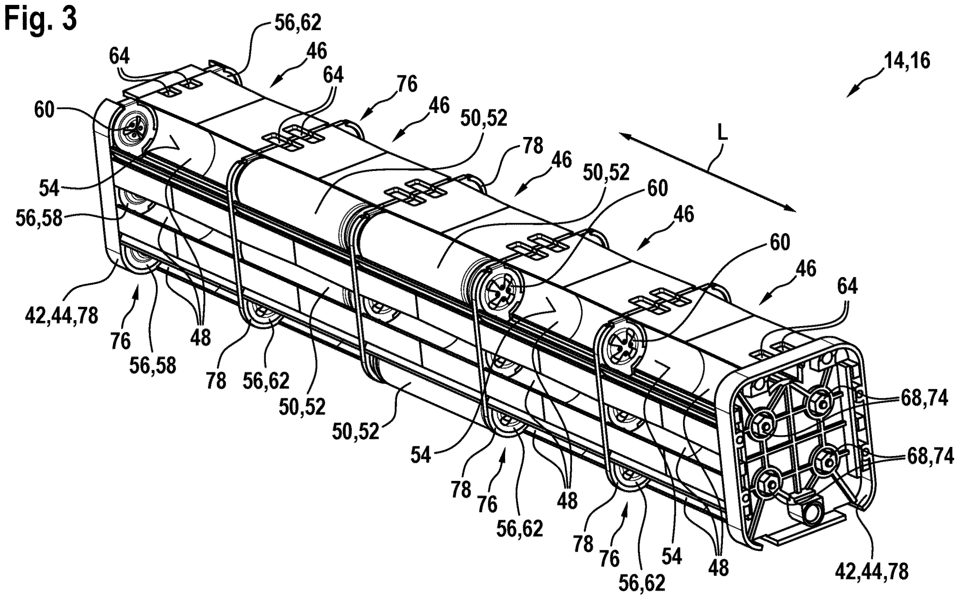

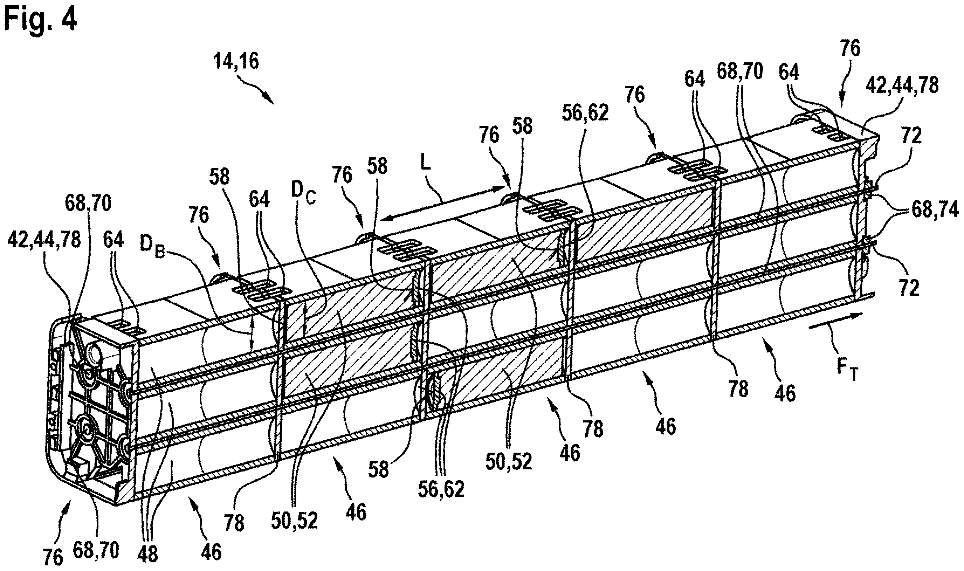

In den Figuren 3 und 4 ist ein Ausführungsbeispiel des Innenlebens der Energiespeichereinheit 16 in einer perspektivischen Ansicht bzw. in einem Schnitt entlang einer Längsachse L der Energiespeichereinheit 16 gezeigt. Im nicht dargestellten Außengehäuse 24 der Energiespeichereinheit 16 ist ein aus zumindest zwei stirnseitigen Endkappen 42 bestehendes Subgehäuse 44 vorgesehen. Die Energiespeichereinheit 16 besteht beispielhaft aus fünf Zellstacks 46, die entlang der Längsachse L der Energiespeichereinheit 16 mit ihren Stirnseiten benachbart zueinander angeordnet sind. Durch die Anordnung der Zellstacks 46 zueinander wird die längliche Geometrie der Energiespeichereinheit 16 maßgeblich bestimmt.

Jeder Zellstack 46 verfügt beispielhaft über insgesamt acht hohlzylinderförmige Bohrungen 48 zur Aufnahme je einer als Rundzelle 50 ausgebildeten Energiespeicherzelle 52. Jede hohlzylinderförmige Bohrung 48 verfügt ihrerseits über eine zylindrische Wandung 54, die die Rundzelle 50 entlang ihrer Mantelfläche umschließt. Die Bohrungen 48 weisen jeweils eine radiale Mittelachse auf, die im Wesentlichen einer radialen Mittelachse der Rundzellen 50 entspricht und die parallel zur Längsachse L der Energiespeichereinheit 16 verläuft. Die Wandungen 54 des Zellstacks 46 sind derart ausgebildet, dass sie zwischen zwei in radialer Richtung benachbarten Rundzellen 50 zwei unterschiedlichen Bohrungen 48 zugeordnet sind. Um die Rundzellen 50 entlang der Längsachse L der Energiespeichereinheit 16 leichter in die Bohrungen 48 einschieben bzw. im Servicefall entsprechend wieder ausschieben zu können, ist ein Innendurchmesser D_{B} jeder Bohrung 48 minimal größer ist als ein Außendurchmesser D_{C} der jeweils darin aufgenommenen Rundzelle 50. Die Wandungen 54 bzw. die Zellstack 46 sind vorzugsweise einstückig aus einem thermoplastischen Kunststoff oder einem vergleichbaren Material ausgebildet. In den Figuren 3 und 4 sind der Übersichtlichkeit halber nur einzelne Bohrungen 48 mit Rundzellen 50 gefüllt. Eine vollständig montierte Energiespeichereinheit 16 ist in der Regel voll mit Energiespeicherzellen 52 besetzt.

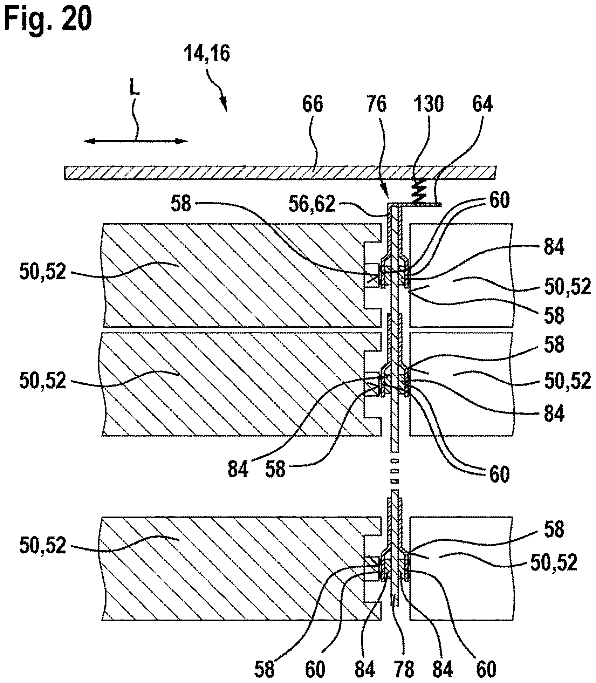

Die Mehrzahl von insgesamt 40 Rundzellen 50 ist über Zellverbinder 56 in einer Reihenschaltung und/oder in einer Parallelschaltung verschaltet, wobei die Reihenschaltung eine über die elektromechanische Schnittstelle (nicht gezeigt) der Energiespeichereinheit 16 abfallende Batteriespannung U_{Batt} definiert, während die Parallelschaltung einzelner Rundzellen 50 primär die Kapazität der Energiespeichereinheit 16 erhöht. Die Zellverbinder 56 bestehen aus einem elektrisch leitenden Metall, wie Nickel, Kupfer, Stahl, Aluminium oder Hilumin. An ihren beiden Stirnseiten weist jede Rundzelle 50 einen positiven oder einen negativen, elektrischen Zellpol 58 zur elektromechanischen Kontaktierung mit zumindest einem federelastischen Kontaktelement 60 des als Leiterblech 62 ausgebildeten Zellverbinders 56 auf. Die Kontaktelemente 60 erstrecken sich somit im Wesentlichen parallel zu den Zellpolen 58 der Rundzellen 50, wobei die Zellpole 58 im Wesentlichen senkrecht zu der Längsachse L der Energiespeichereinheit 16 ausgerichtet sind. Unter "im Wesentlichen" soll in diesem Zusammenhang verstanden werden, dass es keinen exakt parallelen oder senkrechten Verlauf geben muss, sondern dieser Toleranz bedingt auch leicht davon abweichen kann. Jedes Kontaktelement 60 ermöglicht seinerseits eine stoffschlussfrei kraftschlüssige Verbindung des Zellverbinders 56 mit dem jeweiligen Zellpol 58 der Rundzelle 50. Statt einer rein kraftschlüssigen Verbindung ist aber auch eine stoffschlüssige Verbindung zwischen dem Zellpol 58 und dem Kontaktelement 60, beispielsweise in Form einer Widerstands-. Ultraschall- oder Laserschweißverbindung, denkbar. Ebenso wäre eine Lötverbindung möglich, wobei hier auf den ggf. erhöhten Wärmeeintrag in die Energiespeicherzelle geachtet werden muss. Weiterhin dienen die Zellverbinder 56 in Verbindung mit einem nicht näher gezeigten Mikroprozessor einer Elektronikeinheit der Energiespeichereinheit 16 zur Einzelzellenüberwachung (Single Cell Monitoring - SCM). Dazu sind die Zellverbinder 56 über elektrische Kontakte 64, insbesondere über Kontaktfahnen der Leiterbleche 62, mit einer Leiterplatte 66 (vgl. Figur 20), auf der die Elektronikeinheit samt Mikroprozessor angeordnet ist, verbunden. Da weder die Elektronikeinheit noch der Mikroprozessor sowie deren Anordnung auf einer entsprechenden Leiterplatte innerhalb der Energiespeichereinheit 16 von Bedeutung für die Erfindung sind, soll hierauf nicht weiter eingegangen werden. Dem Fachmann sind entsprechende Vorrichtungen zur Überwachung bzw. Steuerung oder Regelung der Energiespeicherzellen 52 bekannt.

Bei gängigen Li-lon-Rundzellen 50 mit einer nominellen Zellspannung U_{Cell} von jeweils 3,6 V fallen über entsprechende elektrische Kontakte der elektromechanischen Schnittstelle Batteriespannungen U_{Batt} von n · 3,6 V ab, wobei n die Anzahl der in Reihe geschalteten Rundzellen 50 definiert. Es können auch so genannte Zell-Cluster, die aus parallel verschalteten Rundzellen 50 bestehen, über die Zellverbinder 56 in Reihe geschaltet werden, um eine bestimmte Batteriespannung U_{Batt} bei gleichzeitig erhöhter Kapazität zu erzielen. Bei anderen elektrochemischen Energiespeicherzellen 52 kann die nominelle Zellspannung U_{Cell} abweichen, so dass je nach Typ und Anwendungsfall der Energiespeichereinheit 16 Batteriespannungen von 18 V bis 70 V und mehr möglich sind. Je nach Anzahl der in einem Zell-Cluster parallel geschalteten Energiespeicherzellen 52 kann die Kapazität handelsüblicher Hochleistungsenergiespeichereinheiten 16 bis zu 14 Ah und mehr betragen, so dass beispielsweise im e-Bike-Bereich bis über 750 Wh erzielbar sind. Die Erfindung ist jedoch nicht von der Art, Bauform, Spannung, Stromlieferfähigkeit, etc. der verwendeten Energiespeicherzellen 52 abhängig, sondern kann auf eine Vielzahl unterschiedlicher Energiespeichereinheiten 16 angewendet werden.

Figur 4 verdeutlicht, dass die fünf Zellstacks 46 der Energiespeichereinheit 16 entlang der Längsachse L derart benachbart zueinander angeordnet sind, dass eine Verpressvorrichtung 68 die Zellverbinder 56 mit den elektrischen Zellpolen 58 der Rundzellen 50 im montierten Zustand der Energiespeichereinheit 16 stoffschlussfrei kraftschlüssig verbindet. Da die Rundzellen 50 fertigungstechnisch nicht immer exakt dieselbe Längenausdehnung aufweisen, ermöglicht dies auf sehr einfache Weise einen Toleranzausgleich in Verbindung mit den federelastischen Kontaktelementen 60 der Zellverbinder 56. Die Verpressvorrichtung 68 besteht im gezeigten Ausführungsbeispiel aus vier das Subgehäuse 44 und die Zellstacks 46 durchdringenden Stangen 70, die zumindest an einem Ende einen Gewindeabschnitt 72 aufweisen. Eine auf das Subgehäuse 44, die Zellstacks 46 und die Zellverbinder 56 wirkende Zugkraft F_{T} kann somit in einfacher Weise über eine mit dem Gewindeabschnitt 72 verschraubbare Mutter 74 der Verpressvorrichtung 68 außerhalb des Subgehäuses 44 verstellt werden, um einerseits über einen langen Betriebszeitraum der Energiespeichereinheit 16 einen sicheren elektrischen Kontakt zwischen den Zellpolen 58 der Rundzellen 50 und den Zellverbindern 56 zu gewährleisten. Ergänzend ergibt sich die Möglichkeit, die Energiespeichereinheit 16 zu zerlegen, um einzelne Rundzellen 50, deren Maximalkapazität mit der Zeit stark nachgelassen hat oder die defekt sind, austauschen zu können. Die Muttern können mit besonderem Vorteil als selbstsichernde Muttern ausgebildet sein.

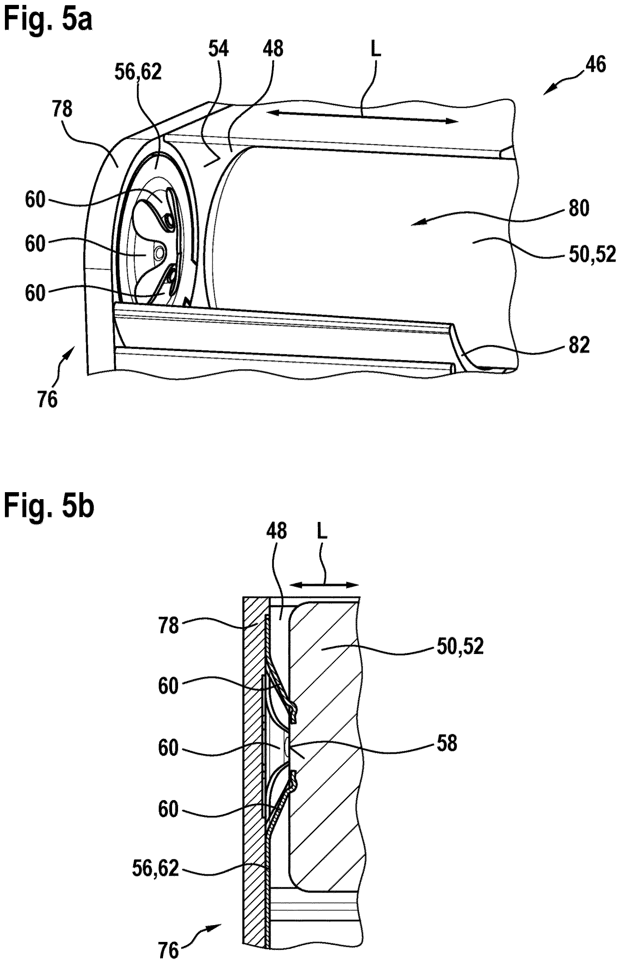

Die an den Stirnseiten der Zellstacks 46 angeordneten Zellverbinder 56 sind jeweils Teil einer Zellverbindervorrichtung 76. Die Zellverbindervorrichtungen 76 sind sowohl zwischen den Zellstacks 46 als auch an den äußeren beiden Stirnseiten der aus den Zellstacks 46 bestehenden Baueinheit angeordnet, so dass auch die beiden Endkappen 42 des Subgehäuses 44 jeweils eine Zellverbindervorrichtung 76 bilden. Mit Bezug auf die Figuren 5a (perspektivische Ansicht) und 5b (Schnittansicht) weist jede Zellverbindervorrichtung 76 eine Trägerschicht 78 auf, auf der der als Leiterblech 62 ausgebildete Zellverbinder 56 mit seinen federelastischen Kontaktelementen 60 angeordnet ist. Die Trägerschicht 78 kann beispielsweise aus einem Polyamid, aus Polypropylen oder einem vergleichbaren Material mit entsprechenden elektrisch isolierenden Eigenschaften bestehen. Ebenso ist eine Trägerschicht 78 aus einem Epoxidharz oder dergleichen denkbar. Zur Verdeutlichung des Aufbaus der Zellverbindervorrichtung 76 ist die Rundzelle 50 in Figur 5a nicht vollständig in die Bohrung 48 eingeschoben. Figur 5b zeigt den eingeschobenen Zustand der Rundzellen 50 in einer Ausschnittsvergrößerung an ihrem Zellpol 58. Durch die Verpressvorrichtung 68 wird der elektrische Zellpol 58 im montierten Zustand der Energiespeichereinheit 16 gegen die federelastischen Kontaktelemente 60 des Zellverbinders 56 in Richtung der Trägerschicht 78 gedrückt. Da die Trägerschicht 78 einen definierten Anschlag für die Kontaktelemente 60 bildet, ergibt sich der Vorteil einer hohen Kontaktsicherheit zwischen den Zellpolen 58 und den Kontaktelementen 60. Zudem ist es durch die getrennte Ausbildung von Trägerschicht 78 und Zellverbinder 56 möglich, die Zellverbindervorrichtung 76 auf einfache Weise durch entsprechende Modifikationen am Zellverbinder 56 an eine geforderte Batteriespannung bzw. -kapazität der Energiespeichereinheit 16 anzupassen.

Entlang der Längsachse L der Energiespeichereinheit 16 ist in der Bohrung 48 des Zellstacks 46 ein Längsspalt 80 derart vorgesehen, dass zumindest ein an den Längsspalt 80 angrenzender, gefedert gelagerter Längssteg 82 der Bohrung 48 eine radiale Fixierung der Rundzelle 50 bewirkt, indem er den Innendurchmessser D_{B} der Bohrung 48 gegenüber dem Außendurchmesser D_{C} der Rundzelle 50 verkleinert. Auf diese Weise kann eine spielfreie Fixierung der Rundzelle 50 in der Bohrung 48 in Verbindung mit einem leichten Einschieben oder Ausziehen in axialer Richtung entlang der Längsachse L realisiert werden. Der Längssteg 82 ist in bevorzugter Weise einstückig mit der Wandung 54 der Bohrung 46 ausgestaltet. Es ist aber auch denkbar, dass der Längssteg 82 mittels einer Klebverbindung oder dergleichen mit der Wandung 54 verbunden ist.

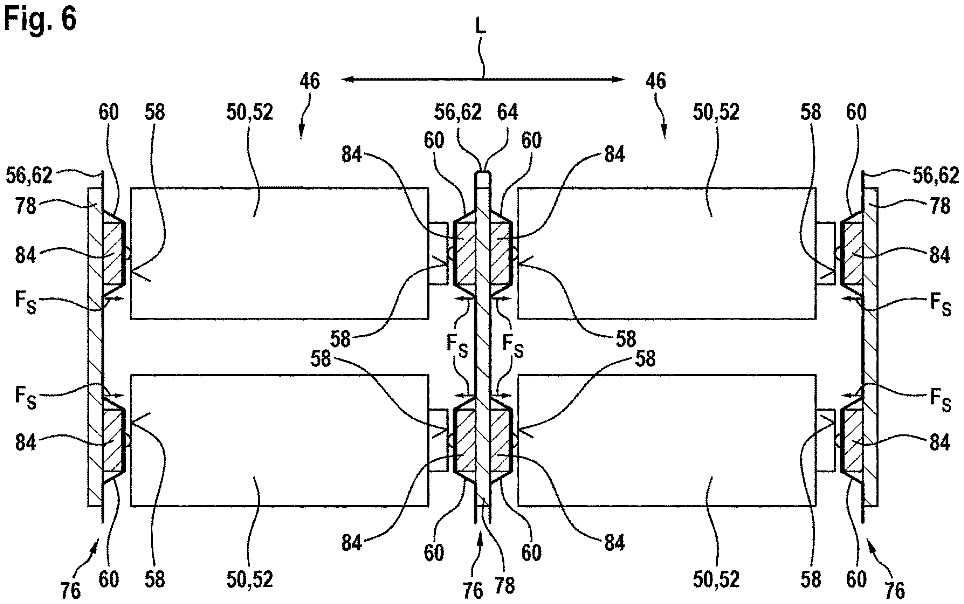

Figur 6 zeigt in einer stark vereinfachten Schnittansicht entlang der Längsachse L ein weiteres Ausführungsbeispiel der Energiespeichereinheit 16 mit zwei benachbarten Zellstacks 46 und darin eingesetzten Rundzellen 50. Bei der mittleren der drei Zellverbindervorrichtungen 76 ist auf den beiden gegenüberliegenden Stirnseiten der Trägerschicht 78 entlang der Längsachse L jeweils zumindest ein Zellverbinder 56 derart angeordnet, dass die Verpressvorrichtung 68 (nicht dargestellt) die elektrischen Zellpole 58 der entlang der Längsachse L benachbarten Rundzellen 50 der beiden Zellstacks 46 im montierten Zustand der Energiespeichereinheit 16 jeweils gegen die Kontaktelemente 60 der Zellverbinder 56 in Richtung der Trägerschicht 78 drückt. Dazu ist vorgesehen, dass die beiden auf jeder Stirnseite der Trägerschicht 78 angeordneten Zellverbinder 56 jeweils als ein einstückiges Leiterblech 62 ausgebildet sind, das die Trägerschicht 78 an einer Kante umgreift, um die elektrischen Zellpole 58 der Rundzellen 50 der beiden benachbarten Zellstacks 46 elektrisch miteinander zu verbinden. Die Zellverbinder 56 bzw. das Leiterblech 62 und die Trägerschicht 78 weisen demzufolge eine Sandwich-Bauweise auf. Das Umgreifen der Trägerschicht 78 kann insbesondere durch die elektrischen Kontakte 64 zur Verbindung mit der Leiterplatte 66 realisiert werden. Ein derartiges Leiterblech 62 ermöglicht zudem eine besonders einfache Montage der Zellverbindervorrichtung 76, da es quasi nur auf die Trägerschicht 78 entlang ihrer Stirnseiten aufgeschoben werden muss. Durch eine derartige symmetrische Vormontage der Zellverbindervorrichtung 76 kann auf einfache Weise eine parallele oder serielle Verschaltung der Rundzellen 50 ohne zusätzlichen stoffschlüssigen Verbindungsprozess realisiert werden.

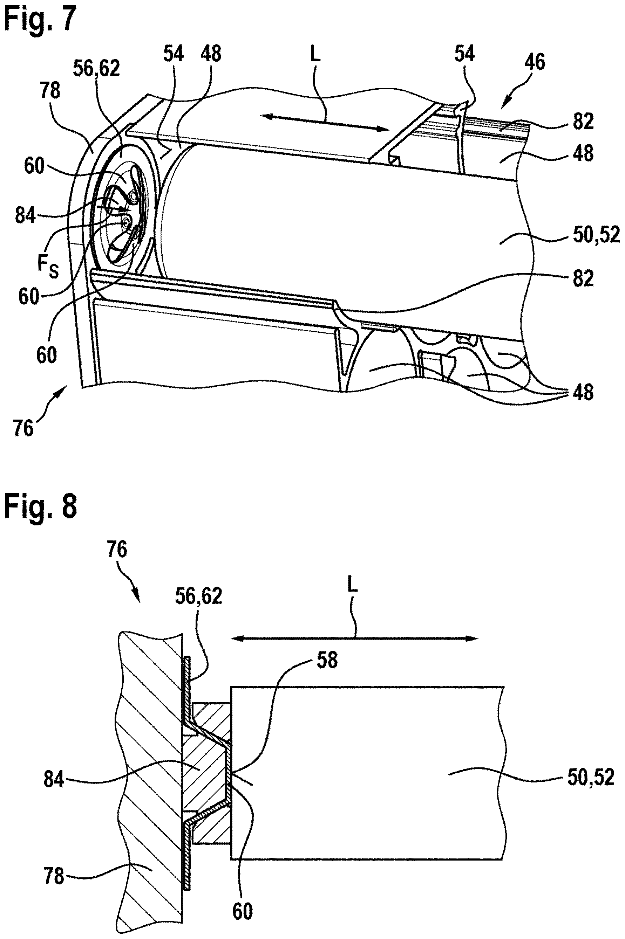

Um die Wirkung der federelastischen Kontaktelemente 60 zu unterstützen, weist die Zellverbindervorrichtung 76 zumindest eine elastische Federkomponente 84 auf, die derart zwischen der Trägerschicht 78 und den Kontaktelementen 60 des Zellverbinders 56 angeordnet ist, dass der elektrische Zellpol 58 der Rundzelle 50 im montierten Zustand der Energiespeichereinheit 16, insbesondere durch die Verpressvorrichtung 68, gegen die Kontaktelemente 60 in Richtung der Trägerschicht 78 entgegen einer Federkraft Fs gedrückt wird, die aus einer ersten Federkraft des Kontaktelements 60 und einer weiteren Federkraft der zumindest einen Federkomponente 84 resultiert. Figur 7 verdeutlicht dies in einer zu Figur 5a analogen Ansicht mit noch nicht vollständig eingeschobener Rundzelle 50. Auf diese Weise lassen sich etwaige Längentoleranzen der Rundzellen 50 noch besser ausgleichen. Weiterhin kann die Federkomponente 84 einen definierten Anschlag für die entsprechenden Kontaktelemente 60 beim Verpressen der Energiespeichereinheit 16 bilden. Ergänzend kann einem etwaigen Nachlassen der federelastischen Wirkung der Kontaktelemente 60 vorbeugend entgegengewirkt werden. Vorzugsweise ist die Federkomponente 84 aus einem Elastomer, insbesondere einem thermoplastischen Elastomer (TPE), einem Schaum, insbesondere Poron, und/oder einem synthetischen Polymer, insbesondere Silikon, gefertigt. Sprich, es sind auch Verbundwerkstoffe aus den genannten Materialien denkbar.

In Figur 8 ist ein weiteres Ausführungsbeispiel der Energiespeichereinheit 16 bzw. der Zellverbindervorrichtung 76 in einem Schnitt entlang der Längsachse L der Energiespeichereinheit 16 gezeigt. Um ein radiales Verschieben der Rundzelle 50 z.B. bei einem Sturz der Energiespeichereinheit 16 oder einem Aufprall des elektromotorisch angetriebenen Fahrzeugs 10 zu vermeiden, ist vorgesehen, dass die Federkomponente 84 im montierten Zustand der Energiespeichereinheit 16 einen reibschlüssigen Haftkontakt zu der Rundzelle 50 im Bereich ihres Zellpols 58 bewirkt.

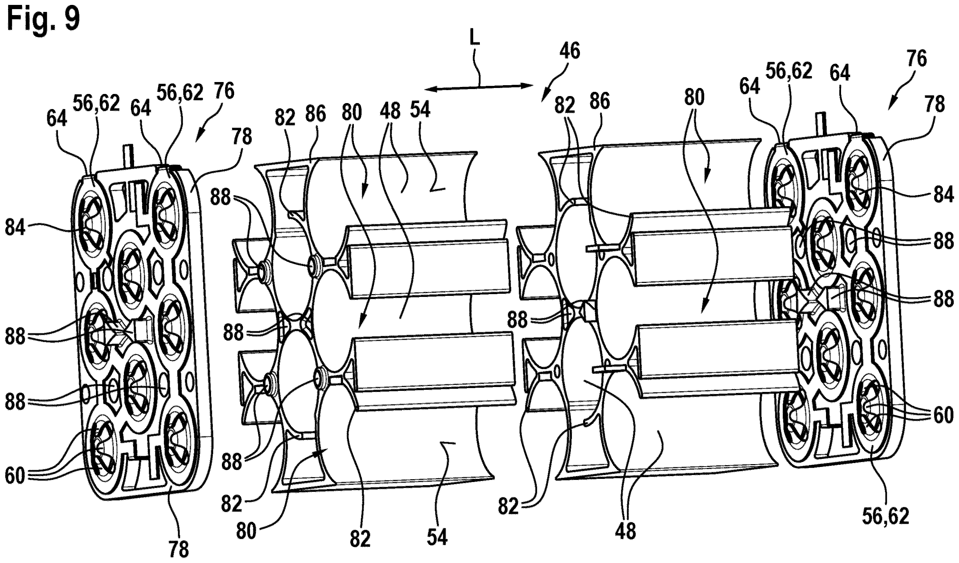

In Figur 9 ist eine Explosionsdarstellung des Zellstacks 46 gezeigt. Dieser besteht aus zwei Zellhaltern 86, die mit ihren zylindrischen Wandungen 54 eine Gitterstruktur für die insgesamt acht hohlzylinderförmigen Bohrungen 48 bilden. Zudem weist jede Bohrung 48 - wie schon zu Figur 6 beschrieben - entlang der Längsachse L der Energiespeichereinheit 16 einen Längsspalt 80 und zumindest einen daran angrenzenden, federnd gelagerten Längssteg 82 auf. An den Stirnseiten des aus den beiden Zellhaltern 86 zusammengesetzten Zellstacks 46 ist jeweils eine Zellverbindervorrichtung 76 zur elektrischen Verschaltung der in die Bohrungen 48 eingesetzten Rundzellen 50 (nicht gezeigt) angeordnet. Dabei weist jede Zellverbindervorrichtung 76 zwei als einstückige Leiterbleche 62 ausgebildete Zellverbinder 56 auf, die die Trägerschicht 78 an einer Kante umgreifen, um die elektrischen Zellpole 58 der Rundzellen 50 zweier benachbarter Zellstacks 46 elektrisch miteinander in einer Reihen- und/oder Parallelschaltung zu verbinden. Die beiden Leiterbleche 62 und die Trägerschicht 78 sind somit in einer Sandwich-Bauweise realisiert. Damit sich die Zellverbindervorrichtungen 76 und die Zellhalter 86 des Zellstacks 46 nicht relativ zueinander bewegen können, weisen die Trägerschicht 78 der Zellverbindervorrichtung 76 und die Zellhalter 86 jeweils eine Mehrzahl von Formschlusselementen 88 zu ihrer gegenseitigen, mechanischen Verbindung auf. Die Formschlusselemente 88 können auf sehr unterschiedliche Weise ausgestaltet sein, beispielsweise als dreieckige, stiftförmige und/oder runde Vorsprünge, die in entsprechend komplementäre Vertiefungen der zu verbindenden Teile eingreifen. Über die Formschlusselemente 88 ist zudem eine eindeutige Montage der Zellverbindervorrichtungen 76 an den Zellstacks 46 bzw. den Zellhaltern 86 im Sinne einer Poka-Yoke-Lösung erzielbar, um insbesondere eine Verpolung der eingesetzten Rundzellen 50 bei der Montage der Energiespeichereinheit 16 zu vermeiden. Es sei erwähnt, dass ein Zellstack 46 auch als ein einzelner Zellhalter 86 ausgebildet sein kann bzw. ein Zellhalter 86 dann in seiner Funktionsweise einem Zellstack 46 entsprechen kann.

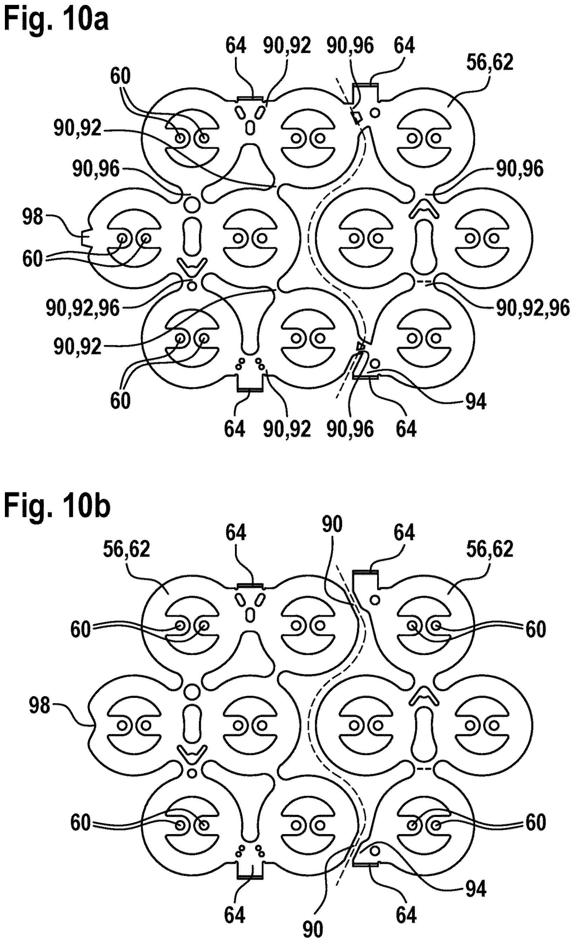

Figur 10 zeigt ein weiteres Ausführungsbeispiel des als Leiterblech 62 ausgebildeten Zellverbinders 56 für einen Zellstack 46 mit insgesamt 10 Energiespeicherzellen 52 in einer Draufsicht. Der Zellverbinder 56 weist eine Mehrzahl von Bearbeitungsbereichen 90 auf, mittels denen die für die Zellpole 58 unterschiedlicher Energiespeicherzellen 52 zu verbindenden Kontaktelemente 60 mechanisch und/oder elektrisch voneinander trennbar sind. Somit kann ein universeller Zellverbinder 56 für Energiespeichereinheiten 16 unterschiedlicher Spannungsbereiche und/oder Energiekapazitäten bereitgestellt werden. Der Zellverbinder 56 ist gemäß Figur 10a derart ausgelegt, dass er für eine Maximalvariante der Energiespeichereinheit 16 geeignet ist und entsprechend auf einfache Weise für Varianten geringerer Spannungsbereiche und/oder Energiekapazitäten durch eine elektromechanische Trennung der entsprechenden Kontaktelemente mittels der Bearbeitungsbereiche 90 modifiziert werden kann. Um die Anpassbarkeit weiter zu vereinfachen, kann der Bearbeitungsbereich 90 als eine Sollbruchstelle 92, beispielsweise in Gestalt einer Verjüngung und/oder einer Perforation, ausgebildet sein. Die Sollbruchstelle 92 muss dabei derart ausgebildet sein, dass sie einer Normalbelastung Stand hält und somit ausreichend robust gegenüber äußeren mechanischen Einflüssen auf die Energiespeichereinheit 16, beispielsweise bei Stürzen, Schlägen oder starken Vibrationen, während ihres vorgesehenen Lebenszyklus ist. Insbesondere kann die Sollbruchstelle 92 durch Zug, Druck und/oder Torsion bzw. eine Scherbewegung auftrennbar sein. Dadurch bleibt sie weiterhin robust gegenüber der erwähnten Normalbelastung.

Um die Trennung an dem Bearbeitungsbereich 90 des Zellverbinders 56 mittels eines geeigneten Hilfswerkzeugs, z.B. einer Trennzange oder eines Hebelwerkzeugs, zu vereinfachen, weist der Zellverbinder 56 in der Umgebung des Bearbeitungsbereichs 90 eine Führungsgeometrie 94 auf, an die das Hilfswerkzeug angesetzt werden kann. Auch ist es denkbar, dass die Sollbruchstelle 92 selbst eine entsprechende Führungsgeometrie 94, beispielsweise in Form einer besonders ausgestalteten Perforation, aufweist.

Eine leichtere Identifizierung und/oder Bearbeitung des Bearbeitungsbereichs 90 ergibt sich ferner, wenn dieser eine Markierung 96 aufweist. Die Markierungen 96 können derart ausgestaltet sein, dass Bearbeitungsbereiche 90, die eine elektrisch sinnvolle Auftrennung ergeben, eine gleich gestaltete Markierung 96 aufweisen. Dies erleichtert die Bearbeitung des Zellverbinders 56 ausgehend von seiner Maximalvariante für den angedachten Einsatzzweck in der Energiespeichereinheit 16.

In Figur 10b ist beispielhaft eine Auftrennung des Zellverbinders 56 aus Figur 10a in zwei getrennte Leiterbleche 62 an der gestrichelten Linie dargestellt. Dazu wurden zwei der insgesamt neun Bearbeitungsbereiche 90 mittels eines geeigneten Trennwerkzeugs an den entsprechenden Markierungen 96 bzw. unter Zuhilfenahme der Führungsgeometrie 96 gemäß Figur 10a aufgetrennt. Somit können die beiden Leiterbleche 62 über ihre noch elektromechanisch miteinander verbundenen Kontaktelemente 60 zwei Zell-Cluster innerhalb des Zellstacks 46 bilden. Je nach Orientierung der Energiespeicherzellen 52 in den zugehörigen Bohrungen 48 des Zellstacks 46 kann so eine Parallel- oder Reihenschaltung für das entsprechende Zell-Cluster umgesetzt werden. Zudem ist es möglich, mittels eines entsprechend auf beiden Seiten der Trägerschicht 78 der Zellverbindervorrichtung 76 angeordneten Leiterblechs 62, dessen Kontaktelemente 60 über den Kontakt 64 elektromechanisch miteinander verbunden sind, die Energiespeicherzellen 52 von benachbarten Zellstacks 46 in einer Parallel- und/oder Reihenschaltung entsprechend den Erfordernissen für die Energiespeichereinheit 16 zu verschalten.

An dem Zellverbinder 56, insbesondere an einem Randbereich des Zellverbinders 56, ist ein mechanischer Indikator 98 zur Identifizierung einer am Zellverbinder 56 vorgenommenen Modifikation vorgesehen. Nach der Bearbeitung des Zellverbinders 56 in Figur 10b wurde der in Figur 10a zu erkennende Vorsprung mittels eines Trennwerkzeugs entfernt. Somit kann im Servicefall leicht erkannt werden, dass sich der entsprechende Zellverbinder nicht mehr im Ursprungszustand für die Maximalvariante der Energiespeichereinheit 16 befindet.

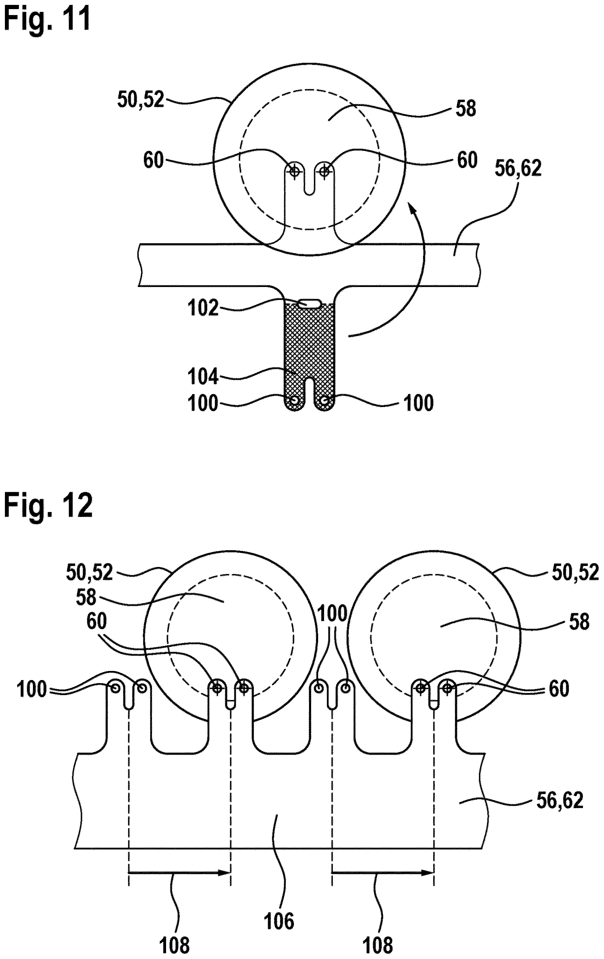

Im Gegensatz zu einer stoffschlussfrei kraftschlüssigen Verbindung der Kontaktelemente 60 und der Zellpole 58 bietet ihre stoffschlüssige Verbindung zwar einen sehr sicheren und dauerhaften elektrischen Kontakt, erschwert aber andererseits die Entnahme bzw. den Austausch von einzelnen Energiespeicherzellen 52, deren Maximalkapazität mit der Zeit stark nachgelassen hat oder die defekt sind. Auch die Entsorgung einer zu recycelnden Energiespeichereinheit 16 wird dadurch erschwert, dass die einzelnen Energiespeicherzellen 52 nur mit verhältnismäßig großem Aufwand von den Zellverbindern 56 getrennt werden können. Die Figuren 11 bis 14 schlagen daher Lösungen derart vor, dass der Zellverbinder 56 zumindest ein primäres Kontaktelement 60 aufweist, das mit dem Zellpol 58 der Energiespeicherzelle 52 stoffschlüssig verbunden ist, wobei der Zellverbinder 56 für zumindest eines der primären Kontaktelemente 60 mindestens ein redundantes Kontaktelement 100 aufweist, das im Ursprungszustand der montierten Energiespeichereinheit 16 mit keinem elektrischen Zellpol 58 der Energiespeicherzellen 16 stoffschlüssig verbunden ist. Somit ist trotz einer stoffschlüssigen Verbindung zwischen dem Zellverbinder 56 und der Energiespeicherzelle 52 eine einfache Entnahme von Energiespeicherzellen 52 möglich. Dazu kann die zu entnehmende Energiespeicherzelle 52 samt des mit ihr stoffschlüssig verbundenen, primären Kontaktelements 60 einfach vom Zellverbinder 56 abgetrennt werden. Das redundante Kontaktelement 100 dient in einem Servicefall zur stoffschlüssigen Verbindung mit einem elektrischen Zellpol 58 einer Ersatz-Energiespeicherzelle 52 für die mit dem primären Kontaktelement 60 verbundene Energiespeicherzelle 52. Die Ersatz-Energiespeicherzelle 52 kann nach Entnahme der auszutauschenden Energiespeicherzelle 52 in sehr einfacher Weise stoffschlüssig, beispielswiese per Widerstands-, Ultraschall- oder Laserschweißen, mit dem redundanten Kontaktelement 100 des Zellverbinders 56 verbunden werden. Zur Verdeutlichung wurden in den Figuren 11 bis 14 die mit einem Zellpol 58 verschweißten punktartigen Verbindungspunkte (Dimpel) der Kontaktelemente 60 mit einem kleinen Kreuz markiert, während die nicht verschweißten Dimpel der redundanten Kontaktelemente 100 als leerer Kreis dargestellt sind. Auch eine Lötverbindung ist unter Beachtung des hierbei entstehenden Wärmeeintrags in die Ersatz-Energeispeicherzelle 52 prinzipiell denkbar.

In Figur 11 sind zwei redundante Kontaktelemente 100 derart benachbart zu den beiden mit dem Zellpol 58 der Energiespeicherzelle 52 stoffschlüssig verbundenen, primären Kontaktelementen 60 angeordnet, dass sie durch ein Umklappen an einem dafür vorgesehenen Bearbeitungsbereich 102, der beispielsweise als eine Perforation und/oder Markierung ausgebildet sein kann, nach einem Austausch der Energiespeicherzelle 52 durch eine entsprechende Ersatz-Energiespeicherzelle 52 und einem Abtrennen der primären Kontaktelemente 60 an die Position der primären Kontaktelemente 60 verbringbar sind. Mit besonderem Vorteil kann auf diese Weise auch für die Ersatz-Energiespeicherzelle 52 die gleiche, optimale Stelle am Zellpol 58 zur stoffschlüssigen Verbindung mit den redundanten Kontaktelementen 100 des Zellverbinders 56 genutzt werden. Zudem können die Zellpole 58 der Energiespeicherzellen 52 eine kleine elektrische Kontaktfläche aufweisen, wie dies insbesondere bei den Zellpolen 58 mit positivem Spannungspotential der Fall ist, um etwaige Kriechströme und Schlüsse zu vermeiden. Zur Vermeidung von Kurzschlüssen ist weiterhin vorgesehen, dass das zumindest eine redundante Kontaktelement 100 im Ursprungszustand der montierten Energiespeichereinheit 16, insbesondere mittels einer Isolierfolie 104, elektrisch isoliert ist. Auf diese Weise kann darüber hinaus ein versehentlicher Aktivierungsvorgang des redundanten Kontaktelements 100 vermieden werden.

Um den Austausch gleich mehrerer Energiespeicherzellen 52 in einem Arbeitsgang zu ermöglichen, weist der Zellverbinder 56 gemäß Figur 12 eine Haupterstreckungsebene 106 auf, die insbesondere quer zur Längsachse L der Energiespeichereinheit 16 verläuft. Die redundanten Kontaktelemente 100 sind derart benachbart zu den primären Kontaktelementen 60 angeordnet, dass sie durch ein Verschieben des Zellverbinders 56 entlang der Haupterstreckungsebene 106 (angedeutet durch die Pfeile 108) in die Position der primären Kontaktelemente 60 verbringbar sind.

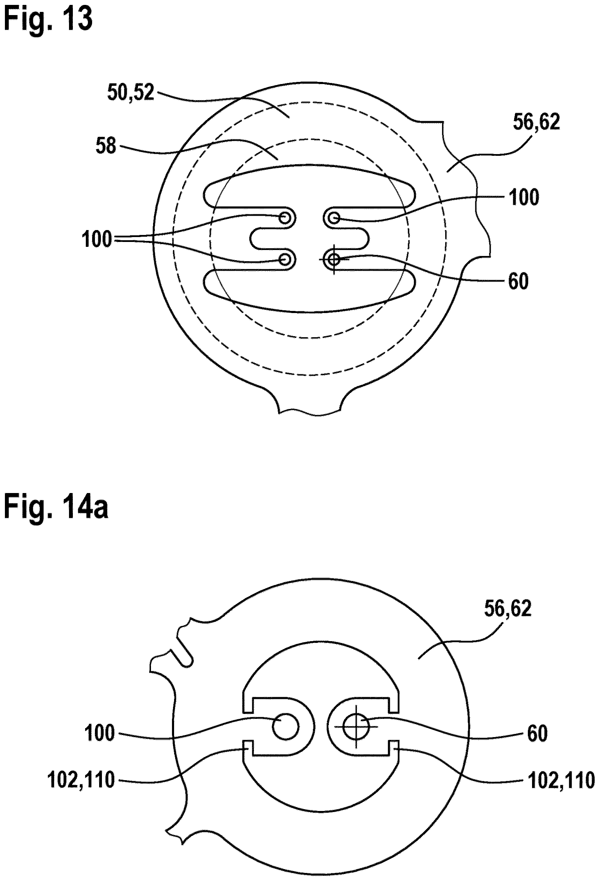

Gemäß Figur 13 sind die redundanten Kontaktelemente 100 derart benachbart zu dem primären Kontaktelement 60 angeordnet, dass eine Außenkontur der primären und der redundanten Kontaktelemente 60, 100 einen Außenumfang der mit dem primären Kontaktelement 60 verbundenen und als Rundzelle 50 ausgebildeten Energiespeicherzelle 52 nicht überschreitet. Somit kann in besonders vorteilhafter Weise eine kompakte Bauform des Zellverbinders 56 realisiert werden. Die redundanten Kontaktelemente 100 liegen dann beispielsweise nur kraftschlüssig auf dem mit dem primären Kontaktelement 60 stoffschlüssig verbundenen Zellpol 58 der Rundzelle 50 auf. Zudem kann der Zellverbinder 56 zum Austausch der Rundzelle 50 unverändert an derselben Position in der Energiespeichereinheit 16 bzw. dem Zellstack 46 verbleiben. Um den Austausch einer Rundzelle 50 an derselben Position in der Energiespeichereinheit 16 ggf. auch mehrmals vornehmen zu können, weist der Zellverbinder 56 für das primäre Kontaktelement 60 drei redundante Kontaktelemente 100 auf. Weiterhin kann vorgesehen sein, dass der Zellverbinder 56 für jedes primäre Kontaktelement 60 mindestens jeweils ein redundantes Kontaktelement 100 aufweist. Somit lassen sich alle Energiespeicherzellen 52 der Energiespeichereinheit 16 im Servicefall auf die gleiche Weise austauschen.

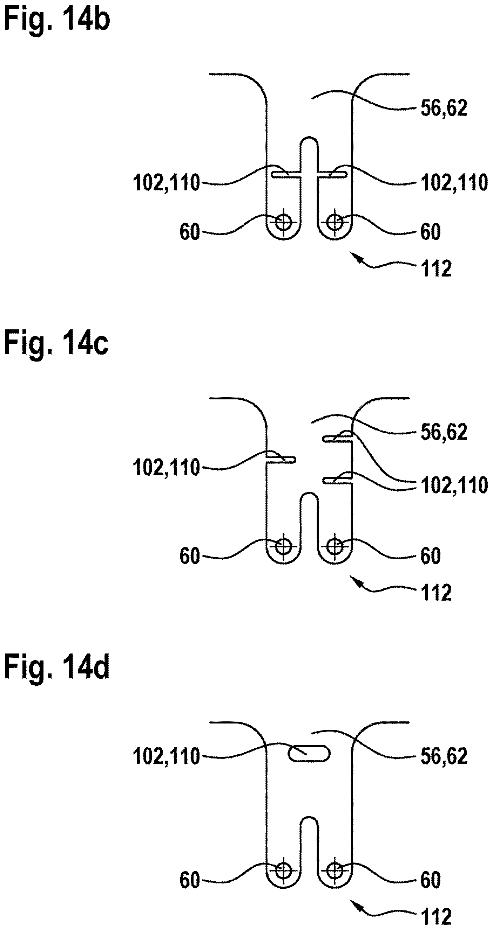

Um den Service bzw. die Entsorgung der Energiespeichereinheit 16 weiter zu vereinfachen, ist der Bearbeitungsbereich 102 des primären und/oder des zumindest einen redundanten Kontaktelements 60, 100 gemäß Figur 14 jeweils als eine Sollbruchstelle 110 ausgebildet. Dies erlaubt eine mechanische Trennung der Energiespeicherzelle 52 vom Zellverbinder 56 durch einfaches Abbrechen ggf. ohne zusätzliches Werkzeug. Die Sollbruchstelle 110 muss jedoch derart ausgebildet sein, dass sie einer Normalbelastung Stand hält und somit ausreichend robust gegenüber äußeren mechanischen Einflüssen auf die Energiespeichereinheit 16, beispielsweise bei Stürzen, Schlägen oder starken Vibrationen, während ihres vorgesehenen Lebenszyklus ist. Insbesondere kann die Sollbruchstelle 110 durch Zug, Druck und/oder Torsion bzw. eine Scherbewegung auftrennbar sein. Dadurch bleibt sie weiterhin robust gegenüber der erwähnten Normalbelastung.

Die Sollbruchstelle 110 ist in unmittelbarer Umgebung des Dimpels zwischen dem primären bzw. dem zumindest einen redundanten Kontaktelement 60, 100 und dem elektrischen Zellpol 58 der Energiespeicherzelle 16 angeordnet. Auch kann der Dimpel selbst als Sollbruchstelle 110 fungieren. Dabei wird die Geometrie des Dimpels derart gestaltet, dass sie bei einer speziellen Bewegung leicht bricht, insbesondere sensitiv auf eine Torsion ausgelegt ist. Somit ließe sich der Dimpel durch eine einfache Rotation der auszutauschenden Energiespeicherzelle 52 um ihre Längsachse von dem Zellpol 58 trennen.

In den Figuren 14a bis 14d sind unterschiedliche Ausgestaltungen der Sollbruchstelle 110 dargestellt. Während Figur 14a jeweils eine als Verjüngung ausgebildete Sollbruchstelle 110 für das primäre und das redundante Kontaktelement 60, 100 zeigt, veranschaulichen die Figuren 14b bis 14d verschiedene Variationen der Sollbruchstellen 110 für jeweils zwei primäre Kontaktelemente 60 mit einer unterschiedliche Anzahl und Anordnung von Einschnitten und Auskerbungen.

Das primäre und/oder das redundante Kontaktelement 60, 100 können jeweils eine Führungsgeometrie 112 zur Abtrennung an der Sollbruchstelle 110 aufweisen. Die Führungsgeometrie 112 kann beispielsweise direkt durch die Außenkontur der Kontaktelemente 60, 100 gebildet sein. Auf diese Weise kann die Abtrennung mittels eines geeigneten Hilfswerkzeugs, z.B. einer Trennzange oder eines Hebelwerkzeugs, vereinfacht werden, das an der Führungsgeometrie 112 angesetzt wird. Zudem können die Führungsgeometrie 112 und/oder der Bearbeitungsbereich 102 derart ausgestaltet werden, dass sie einen Austausch der Energiespeicherzelle 52 bzw. eine Manipulation am Zellverbinder 56 erkennbar machen.

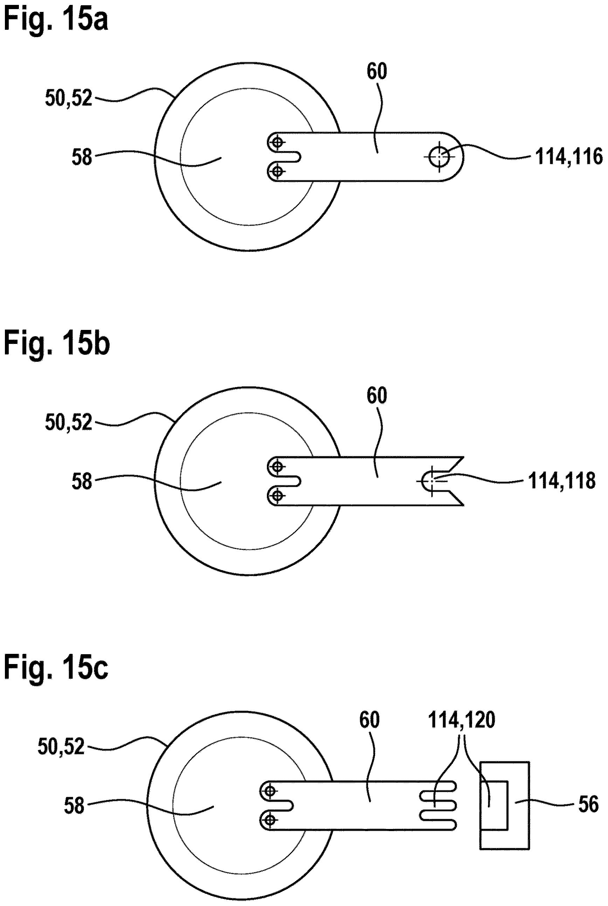

Statt einer Sollbruchstelle 110 kann alternativ oder ergänzend gemäß der Figuren 15 bis 18 auch vorgesehen sein, dass das primäre und/oder das redundante Kontaktelement 60, 100 einen Verbindungsbereich 114 aufweist, um es reversibel lösbar mit dem Zellverbinder 56 auszugestalten. Unter einem reversiblen Lösen soll verstanden werden, dass die elektromechanische Verbindung zwischen dem Kontaktelement 60, 100 und dem Zellverbinder 56 gelöst und wieder hergestellt werden kann. So ist es einerseits möglich, das primäre Kontaktelement 60 vom Zellverbinder 56 zu lösen und anschließend wieder damit zu verbinden und andererseits das mit dem Zellpol 58 einer verbrauchten Energiespeicherzelle 52 stoffschlüssig verbundene, primäre Kontaktelement 60 durch ein mit dem Zellpol 58 einer Ersatz-Energiespeicherzelle 52 verbundene Kontaktelemente 100 zu ersetzen. Darüber hinaus kann die Montage der Energiespeichereinheit 16 durch eine Vormontage der Energiespeicherzellen 52 mit den Kontaktelementen 60 vereinfacht werden.

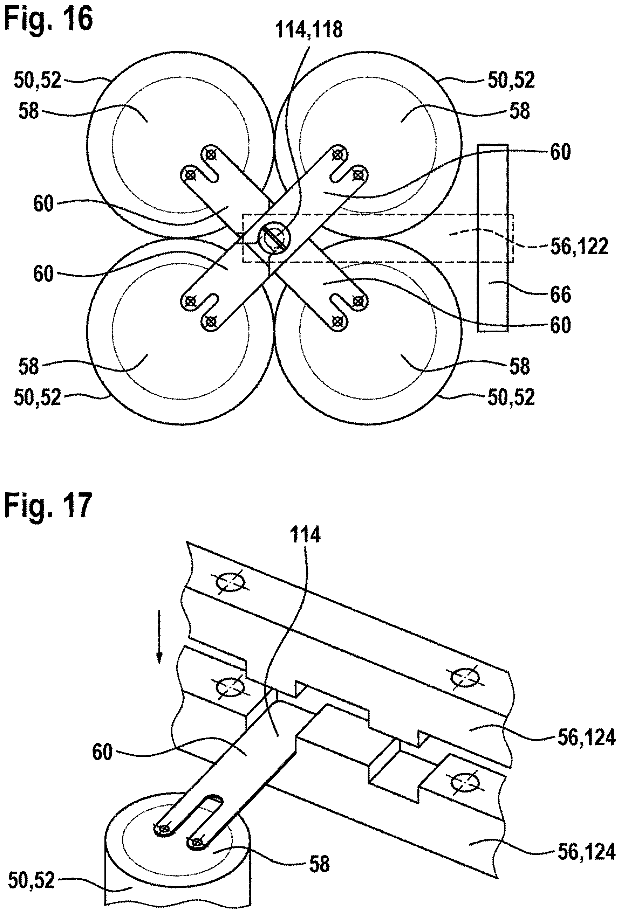

In Figur 15a ist der Verbindungsbereich 114 des Kontaktelements 60 als eine geschlossen, ovale Öse 116 ausgebildet. Figur 15b zeigt eine Variante als eine einseitig offene Öse 118. Beide Varianten können mittels einer Schraubverbindung (vgl. Figur 16) mit dem Zellverbinder 56 verbunden werden und gewährleisten durch ihre ovale Ausgestaltung einen gewissen Toleranzausgleich in radialer Richtung der Rundzelle 50. Während die geschlossen Öse 116 einen besseren Halt des Kontaktelements 60 bei der Montage bietet, erlaubt die offene Öse 118 eine leichtere Montage durch ein seitliches Einschieben in die noch nicht angezogene Schraubverbindung. Zudem lassen sich auf diese Weise ggf. mehrere Kontaktelemente 60 an einem gemeinsamen Verbindungspunkt des Zellverbinders 56 befestigen. Eine werkzeuglose Verbindung zeigt Figur 15c, bei der der Verbindungsbereich 114 als eine Steckverbindung 120 zwischen dem Kontaktelement 60 und dem Zellverbinder 56 ausgebildet ist.

In Figur 16 sind die Verbindungsbereiche 114 der Kontaktelemente 60 als offene Ösen 118 gemäß Figur 15b ausgeführt. Dies erlaubt eine einfache elektromechanische Verbindung der Zellpole 58 der vier gezeigten Rundzellen 50 mittels einer einzigen Schraubverbindung am Zellverbinder 56. Der Zellverbinder 56 kann hier beispielsweise als ein Stanzgitter 122 ausgebildet sein, das seinerseits elektromechanisch mit der Leiterplatte 66 der Energiespeichereinheit 16 verbunden ist.

Eine Alternative zu den Ausführungsbeispielen gemäß den Figuren 15 und 16 zeigt Figur 17, bei der der Verbindungsbereich 114 als flaches, blankes Ende des Kontaktelements 60 ausgebildet ist, das seinerseits in einen als Schienensystem 124 ausgebildeten Zellverbinder 56 eingeklemmt wird. Dabei ist es zudem denkbar, dass der Verbindungsbereich 114 zur leichteren Positionierung und/oder Fixierung im Schienensystem 124 eingeprägte Vertiefungen und/oder Phasen aufweist. Ergänzend oder alternativ kann der Verbindungsbereich 114 auch mit zumindest einem Lötauge oder einem leicht zu verlötenden Material versehen sein, um den elektrischen Kontakt zwischen dem Kontaktelement 60 und dem Zellverbinder 56 insbesondere gegenüber Vibrationen und Erschütterungen dauerhaft zu sichern und ein fehlerfreies Batterie Management System (BMS) zu gewährleisten. Bekanntermaßen gestattet auch eine Lötverbindung ein reversibles Lösen.

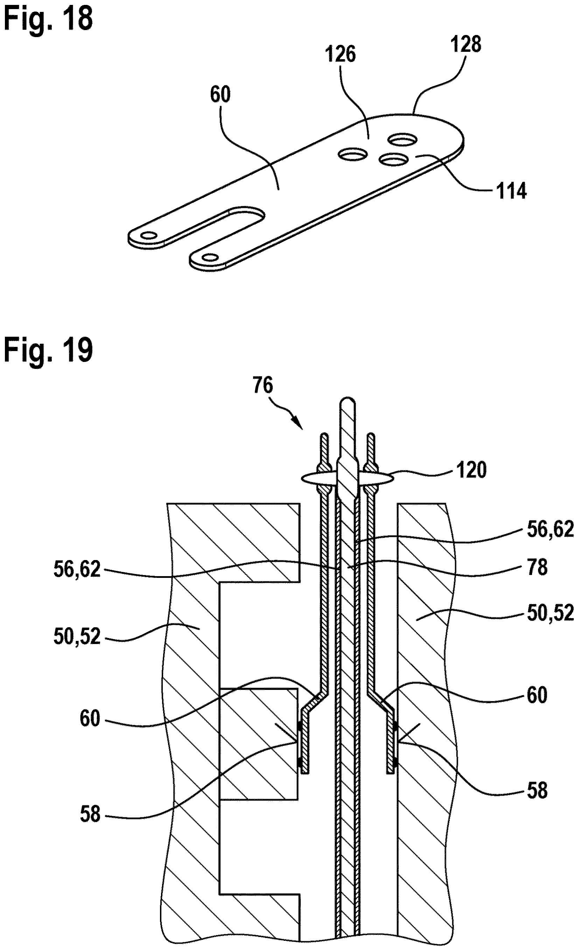

Anhand von Figur 19 soll die reversible Steckverbindung 120 gemäß Figur 15c für eine Zellverbindervorrichtung 76 mit einem auf beiden Seiten der Trägerschicht 78 angeordneten Zellverbinder 56 nochmals verdeutlicht werden. Wie zu erkennen ist, sind die Kontaktelemente 60 an einem Ende stoffschlüssig und irreversibel über entsprechend mit den Zellpolen 58 der Energiespeicherzellen 52 verschweißten Dimpeln verbunden, während sie an ihrem anderen Ende jeweils die Steckverbindung 120 aufweisen. Diese kann auf einfache Weise reversibel mit dem Zellverbinder 56 verbunden werden, um einen vorzugsweise werkzeuglosen Austausch einer nicht mehr nutzbaren Energiespeicherzelle 52 samt des damit stoffschlüssig verbundenen Kontaktelements 60 zu ermöglichen.

In Figur 20 ist ein weiteres Ausführungsbeispiel der Energiespeichereinheit 16 in einem stark vereinfachter Schnitt entlang ihrer Längsachse L gezeigt. Auf die Zellverbindervorrichtung 76 soll hier nicht erneut eingegangen werden, da diese im Wesentlichen der Beschreibung gemäß der Figuren 6 bis 9 entspricht. Wesentlich ist hier die reversible Verbindung zwischen der Zellverbindervorrichtung 76 bzw. des Zellverbinders 56 mit der Leiterplatte 66 der Energiespeichereinheit 16, beispielsweise durch ein Federelement 130, einen Steckkontakt oder dergleichen. Auf diese Weise kann die Leiterplatte 66 mitsamt der darauf angeordneten Elektronikeinheit für das BMS (nicht gezeigt) im Falle eines Defekts sehr einfach ausgetauscht werden. Entsprechend ist auch ein einfacher Austausch der Zellverbinder 56 bzw. der Zellverbindervorrichtungen 76 möglich.

Es sei abschließend noch darauf hingewiesen, dass die gezeigten Ausführungsbeispiele weder auf die Figuren 1 bis 20 noch auf die gezeigten Formen, Mengen und Größenverhältnisse der einzelnen Elemente beschränkt sind. Diese sind lediglich exemplarisch zu verstehen.

## Patentansprüche

1. Energiespeichereinheit (16) für ein elektromotorisch angetriebenes Fahrzeug (10), insbesondere für ein elektromotorisch angetriebenes Ein- oder Zweirad (12), mit einem Subgehäuse (44), in dem zumindest zwei Zellstacks (46) zur Aufnahme von jeweils mindestens zwei als Rundzellen (50) ausgebildeten elektrochemischen Energiespeicherzellen (52) aufgenommen sind, wobei jede Energiespeicherzelle (52) zwei elektrische Zellpole (58) aufweist und die elektrischen Zellpole (58) zumindest zweier Energiespeicherzellen (52) über zumindest einen Zellverbinder (56) elektrisch leitend in einer Reihen- und/oder Parallelschaltung miteinander verbunden sind, **dadurch gekennzeichnet, dass** die zumindest zwei Zellstacks (46) derart benachbart zueinander angeordnet sind, dass eine Verpressvorrichtung (68) der Energiespeichereinheit (16) die Zellverbinder (56) mit den elektrischen Zellpolen (58) der Energiespeicherzellen (52) im montierten Zustand der Energiespeichereinheit (16) stoffschlussfrei kraftschlüssig verbindet, wobei eine Zugkraft (F_{T}) der Verpressvorrichtung (68) außerhalb des Subgehäuses (44) verstellbar ist.

2. Energiespeichereinheit (16) nach Anspruch 1, **dadurch gekennzeichnet, dass** die Verpressvorrichtung (58) als zumindest eine durch das Subgehäuse (44) hindurch ragende Stange (70) mit zumindest einem stirnseitig angebrachten Gewindeabschnitt (72) ausgebildet ist und die Zugkraft (F_{T}) über eine mit dem Gewindeabschnitt (72) verschraubbare Mutter (74) verstellbar ist.

3. Energiespeichereinheit (16) nach einem der vorhergehenden Ansprüche, **dadurch gekennzeichnet, dass** die Energiespeichereinheit (16) zumindest eine Zellverbindervorrichtung (76) mit einer Trägerschicht (78) aufweist, wobei der zumindest eine Zellverbinder (56) derart auf der Trägerschicht (78) angeordnet ist, dass die Verpressvorrichtung (68) zumindest einen der elektrischen Zellpole (58) einer Energiespeicherzelle (52) im montierten Zustand der Energiespeichereinheit (16) gegen ein federelastisches Kontaktelement (60, 100) des Zellverbinders (56) in Richtung der Trägerschicht (78) drückt.

4. Energiespeichereinheit (16) nach Anspruch 3, **dadurch gekennzeichnet, dass** die Zellverbindervorrichtung (76) zwischen zwei Zellstacks (46) angeordnet ist, wobei auf zwei gegenüberliegenden Stirnseiten der Trägerschicht (78) entlang einer Längsachse (L) der Energiespeichereinheit (16) jeweils zumindest ein Zellverbinder (56) derart angeordnet ist, dass die Verpressvorrichtung (68) die elektrischen Zellpole (58) zweier entlang der Längsachse (L) benachbarter Energiespeicherzellen (52) der beiden Zellstacks (46) im montierten Zustand der Energiespeichereinheit (16) jeweils gegen die Kontaktelemente (60, 100) der Zellverbinder (56) in Richtung der Trägerschicht (78) drückt.

5. Energiespeichereinheit (16) nach Anspruch 4, **dadurch gekennzeichnet, dass** die zumindest zwei auf den Stirnseiten der Trägerschicht (78) angeordneten Zellverbinder (56) als ein einstückiges Leiterblech (62) ausgebildet sind, das die Trägerschicht (78) umgreift, um die elektrischen Zellpole (58) zumindest eines Teils der Energiespeicherzellen (52) der beiden Zellstacks (46) elektrisch miteinander zu verbinden.

6. Energiespeichereinheit (16) nach einem der vorhergehenden Ansprüche 3 bis 5, **dadurch gekennzeichnet, dass** die zumindest eine Zellverbindervorrichtung (76) zumindest eine elastische Federkomponente (84) aufweist, die derart zwischen der Trägerschicht (78) und dem zumindest einen Kontaktelement (60, 100) des zumindest einen Zellverbinders (56) angeordnet ist, dass die Verpressvorrichtung (68) zumindest einen der elektrischen Zellpole (58) der Energiespeicherzelle (52) im montierten Zustand der Energiespeichereinheit (16) gegen das zumindest eine Kontaktelement (60, 100) in Richtung der Trägerschicht (78) entgegen einer Federkraft (Fs) drückt, die aus einer ersten Federkraft des Kontaktelements (60) und einer weiteren Federkraft der zumindest einen Federkomponente (84) resultiert

7. Energiespeichereinheit (16) nach Anspruch 6, **dadurch gekennzeichnet, dass** die Federkomponente (84) im montierten Zustand der Energiespeichereinheit (16) einen reibschlüssigen Haftkontakt zu der Energiespeicherzelle (52) im Bereich ihres Zellpols (58) bewirkt.

8. Energiespeichereinheit (16) nach einem der vorhergehenden Ansprüche 6 oder 7, **dadurch gekennzeichnet, dass** die Federkomponente (84) aus einem Elastomer, insbesondere einem thermoplastischen Elastomer, einem Schaum, insbesondere Poron, und/oder einem synthetischen Polymer, insbesondere Silikon, besteht.

9. Energiespeichereinheit (16) nach einem der vorhergehenden Ansprüche 3 bis 8, **dadurch gekennzeichnet, dass** die Trägerschicht (78) aus einem Polyamid oder aus Polypropylen besteht.

10. Energiespeichereinheit (16) nach einem der vorhergehenden Ansprüche, **dadurch gekennzeichnet, dass** jeder Zellstack (46) eine Mehrzahl hohlzylinderförmiger Bohrungen (48) zur Aufnahme je einer Rundzelle (50) aufweist, wobei entlang der Längsachse (L) der Energiespeichereinheit (16) in der Bohrung (48) ein Längsspalt (80) derart vorgesehen ist, dass zumindest ein an den Längsspalt (80) angrenzender, gefedert gelagerter Längssteg (82) der Bohrung (48) eine radiale Fixierung der Rundzelle (50) bewirkt und ein Innendurchmesser (D_{B}) der Bohrung (48) ohne den Längssteg (82) größer ist als ein Außendurchmesser (D_{C}) der jeweils darin aufgenommenen Rundzelle (50).

11. Energiespeichereinheit () nach einem der vorhergehenden Ansprüche 3 bis 10, **dadurch gekennzeichnet, dass** die Trägerschicht (78) der Zellverbindervorrichtung (76) und der Zellstacks (46) jeweils eine Mehrzahl von Formschlusselementen (88) zu ihrer gegenseitigen, mechanischen Verbindung aufweisen.

12. Elektromotorisch angetriebenes Fahrzeug (10), insbesondere elektromotorisch angetriebenes Ein- oder Zweirad (12), mit einer mit dem elektromotorisch angetriebenen Fahrzeug (10) lösbar verbindbaren oder in dem elektromotorisch angetriebenen Fahrzeug (10) fest integrierten Energiespeichereinheit (16) nach einem der vorherigen Ansprüche.
